# EUROPEAN PATENT APPLICATION

(11) **EP 4 503 675 A1**
(43) Date of publication of application: **05.02.2025**
(21) Application number: 23773803.4
(22) Date of filing: 20.03.2023
(51) Int. Cl.: H04W 4/50

(54) **TERMINAL DISCOVERY METHOD AND APPARATUS, DEVICE, AND STORAGE MEDIUM**

(30) Priority: 24.03.2022 CN 202210303809
(71) Applicant: VIVO MOBILE COMMUNICATION CO., LTD., Dongguan, Guangdong 523863 (CN)
(72) Inventor: ZHANG, Yizhong, Dongguan, Guangdong 523863 (CN); WANG, Wen, Dongguan, Guangdong 523863 (CN)
(74) Representative: Lavoix
(86) International application number: PCT/CN2023/082560
(87) International publication number: WO 2023/179556

(57) **Abstract**

This application discloses a terminal discovery method and apparatus, a device, and a storage medium, pertaining to the field of communication technologies. The terminal discovery method according to embodiments of this application includes: obtaining, by a first terminal, first configuration information related to a first service; and sending, by the first terminal, a first request message to a second terminal; where the first request message is used to request discovery of the second terminal supporting the first service, and the first service includes a ranging-based service and/or a sidelink positioning service.

## Description

### CROSS-REFERENCE TO RELATED APPLICATIONS

This application claims priority to Chinese Patent Application No. 202210303809.6, filed on March 24, 2022, and entitled "TERMINAL DISCOVERY METHOD AND APPARATUS, DEVICE, AND STORAGE MEDIUM", which is incorporated herein by reference in its entirety.

### TECHNICAL FIELD

This application pertains to the field of communication technologies, and specifically, relates to a terminal discovery method and apparatus, a device, and a storage medium.

### BACKGROUND

With development of communication technologies, a new application scenario, namely ranging-based services and sidelink positioning (Ranging based services and sidelink positioning), is proposed. Ranging refers to determining a distance between two or more terminals through direct device connection, and/or a direction and/or a relative location of one terminal (that is, a target terminal) with respect to another terminal (that is, a reference terminal). Sidelink positioning refers to locating the terminal using a PC5 interface. Ranging-based services and sidelink positioning can be used in various vertical fields, such as consumers, smart homes, smart cities, intelligent transportation, smart retail, and industry 4.0.

In the foregoing different application fields, communication between terminals can be implemented by using different access technologies, such as vehicle-to-everything (Vehicle-to-Everything, V2X) based on LTE, new radio NR sidelink, and other radio access technologies (Radio Access Technology, RAT) that may be supported on PC5. Therefore, for persons skilled in the art, how to enable one terminal supporting ranging-based services and sidelink positioning to discover another terminal supporting ranging-based services and sidelink positioning before performing ranging-based services and sidelink positioning is a technical problem that needs to be resolved urgently.

### SUMMARY

Embodiments of this application provide a terminal discovery method and apparatus, a device, and a storage medium, which can implement that one terminal supporting ranging-based services and sidelink positioning discovers another terminal supporting ranging-based services and sidelink positioning.

According to a first aspect, a terminal discovery method is provided, applied to a first terminal, and the method includes:
obtaining, by a first terminal, first configuration information related to a first service; and
sending, by the first terminal, a first request message to a second terminal; where
the first request message is used to request discovery of the second terminal supporting the first service, and the first service includes a ranging-based service and/or a sidelink positioning service.

According to a second aspect, a terminal discovery method is provided, applied to a second terminal, and the method includes:
obtaining, by a second terminal, second configuration information related to a first service; and
receiving, by the second terminal, a first request message sent by a first terminal; where
the first request message is used for discovering a second terminal that supports the first service, and the first service is a terminal discovery related service.

According to a third aspect, a terminal discovery method is provided, applied to a first network side, and the method includes:
sending, by a first network side, first configuration information to a first terminal, where the first configuration information is used for a first service, and the first service includes a ranging-based service and/or a sidelink positioning service.

According to a fourth aspect, a terminal discovery method is provided, applied to a second network side, and the method includes:
sending, by a second network side, second configuration information to a second terminal; where the second configuration information is used for a first service, and the first service includes a ranging-based service and/or a sidelink positioning service.

According to a fifth aspect, a terminal discovery apparatus is provided, applied to a first terminal, and the apparatus includes:
a first obtaining unit, configured to obtain first configuration information related to a first service; and
a first sending unit, configured to send a first request message to a second terminal.

The first request message is used to request discovery of the second terminal supporting the first service, and the first service includes a ranging-based service and/or a sidelink positioning service.

According to a sixth aspect, a terminal discovery apparatus is provided, applied to a second terminal, and the apparatus includes:
a second obtaining unit, configured to obtain second configuration information related to a first service; and
a second receiving unit, configured to receive a first request message sent by a first terminal; where
the first request message is used for discovering a second terminal that supports the first service, and the first service is a terminal discovery related service.

According to a seventh aspect, a terminal discovery apparatus is provided, applied to a first network-side device, and the apparatus includes:
a fifth sending module, configured to send first configuration information to a first terminal, where the first configuration information is used for a first service, and the first service includes a ranging-based service and/or a sidelink positioning service.

According to an eighth aspect, a terminal discovery apparatus is provided, applied to a second network-side device, and the apparatus includes:
a sixth sending module, configured to send second configuration information to a second terminal; where the second configuration information is used for a first service, and the first service includes a ranging-based service and/or a sidelink positioning service.

According to a ninth aspect, a first terminal is provided, where the first terminal includes a processor and a memory, and a program or instruction capable of running on the processor is stored in the memory. When the program or instruction is executed by the processor, the steps of the method according to the first aspect are implemented.

According to a tenth aspect, a first terminal is provided, including a processor and a communication interface, where
the processor is configured to obtain first configuration information related to a first service; and
the communication interface is configured to send a first request message to a second terminal.

According to an eleventh aspect, a second terminal is provided, where the second terminal includes a processor and a memory, and a program or instruction capable of running on the processor is stored in the memory. When the program or instruction is executed by the processor, the steps of the method according to the second aspect are implemented.

According to a twelfth aspect, a second terminal is provided, including a processor and a communication interface, where
the processor is configured to obtain second configuration information related to a first service; and
the communication interface is configured to receive a first request message sent by a first terminal.

According to a thirteenth aspect, a first network-side device is provided, where the first network-side device includes a processor and a memory, and a program or instruction capable of running on the processor is stored in the memory. When the program or instruction is executed by the processor, the steps of the method according to the third aspect are implemented.

According to a fourteenth aspect, a first network-side device is provided, including a processor and a communication interface, where
the communication interface is configured to send first configuration information to a first terminal, where the first configuration information is used for a first service, and the first service includes a ranging-based service and/or a sidelink positioning service.

According to a fifteenth aspect, a second network-side device is provided, where the second network-side device includes a processor and a memory, and a program or instruction capable of running on the processor is stored in the memory. When the program or instruction is executed by the processor, the steps of the method according to the fourth aspect are implemented.

According to a sixteenth aspect, a second network-side device is provided, including a processor and a communication interface, where
the communication interface is configured to send second configuration information to a second terminal; where the second configuration information is used for a first service, and the first service includes a ranging-based service and/or a sidelink positioning service.

According to a seventeenth aspect, a terminal discovery system is provided, including a first terminal, a second terminal, a first network-side device, and a second network-side device, where the first terminal can be configured to perform the steps of the terminal discovery method according to the first aspect, the second terminal can be configured to perform the steps of the terminal discovery method according to the second aspect, the first network-side device can be configured to perform the steps of the terminal discovery method according to the third aspect, and the second network-side device can be configured to perform the steps of the terminal discovery method according to the fourth aspect.

According to an eighteenth aspect, a readable storage medium is provided, where a program or instruction is stored in the readable storage medium; and when the program or instruction is executed by a processor, the steps of the method according to the first aspect are implemented, or the steps of the method according to the second aspect are implemented, or the steps of the method according to the third aspect are implemented, or the steps of the method according to the fourth aspect are implemented.

According to a nineteenth aspect, a chip is provided, where the chip includes a processor and a communication interface, the communication interface is coupled to the processor, and the processor is configured to run a program or instruction to implement the method according to the first aspect, or implement the method according to the second aspect, or implement the method according to the third aspect, or implement the method according to the fourth aspect.

According to a twentieth aspect, a computer program/program product is provided, where the computer program/program product is stored in a storage medium, and the computer program/program product is executed by at least one processor to implement the terminal discovery method according to the first aspect, or implement the terminal discovery method according to the second aspect, or implement the terminal discovery method according to the third aspect, or implement the terminal discovery method according to the fourth aspect.

In the embodiments of this application, the configuration information related to a ranging-based service and/or sidelink positioning service is obtained to perform the ranging-based service and/or sidelink positioning service. In a case that a terminal supporting the ranging-based service and/or sidelink positioning service needs to be discovered, the first request message is transmitted, so that one terminal supporting the ranging-based service and/or sidelink positioning service can discover another terminal supporting ranging-based service and/or sidelink positioning service to obtain the ranging-based service and/or sidelink positioning service.

### BRIEF DESCRIPTION OF DRAWINGS

FIG. 1 is a block diagram of a wireless communications system to which the embodiments of this application are applicable;
FIG. 2 is a first schematic flowchart of a terminal discovery method according to an embodiment of this application;
FIG. 3 is a second schematic flowchart of a terminal discovery method according to an embodiment of this application;
FIG. 4 is a third schematic flowchart of a terminal discovery method according to an embodiment of this application;
FIG. 5 is a fourth schematic flowchart of a terminal discovery method according to an embodiment of this application;
FIG. 6 is a fifth schematic flowchart of a terminal discovery method according to an embodiment of this application;
FIG. 7 is a sixth schematic flowchart of a terminal discovery method according to an embodiment of this application;
FIG. 8 is a first schematic structural diagram of a terminal discovery apparatus according to an embodiment of this application;
FIG. 9 is a second schematic structural diagram of a terminal discovery apparatus according to an embodiment of this application;
FIG. 10 is a third schematic structural diagram of a terminal discovery apparatus according to an embodiment of this application;
FIG. 11 is a fourth schematic structural diagram of a terminal discovery apparatus according to an embodiment of this application;
FIG. 12 is a schematic structural diagram of a communication device according to an embodiment of this application;
FIG. 13 is a schematic diagram of a hardware structure of a first terminal for implementing the embodiments of this application;
FIG. 14 is a schematic diagram of a hardware structure of a second terminal for implementing the embodiments of this application;
FIG. 15 is a schematic diagram of a hardware structure of a first network-side device for implementing the embodiments of this application; and
FIG. 16 is a schematic diagram of a hardware structure of a second network-side device for implementing the embodiments of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the terms used in this way are interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communications system.

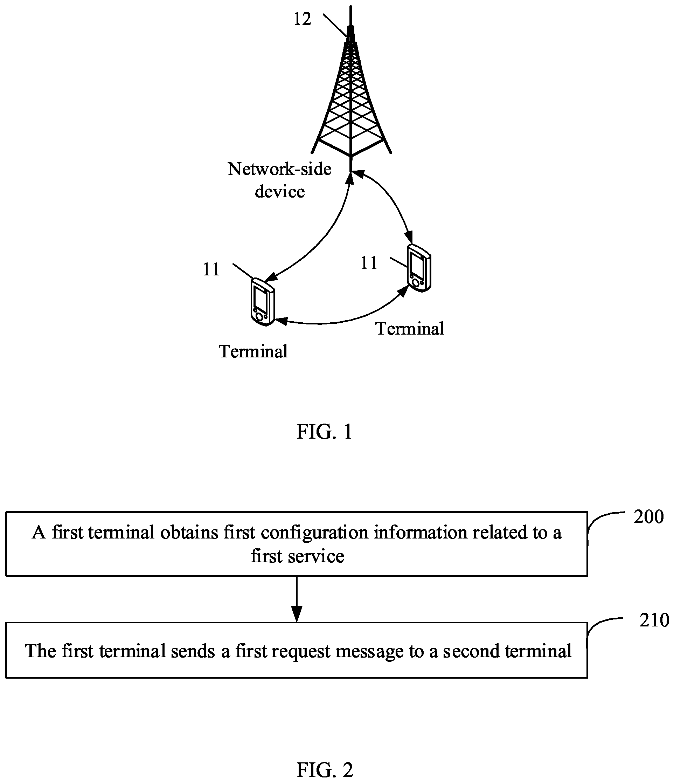

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application. The network-side device 12 may include an access network device or a core network device, where the access network device 12 may also be referred to as a radio access network device, a radio access network (Radio Access Network, RAN), a radio access network function, or a radio access network unit. The access network device 12 may include a base station, a WLAN access point a Wi-Fi node, or the like. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS),a home NodeB, a home evolved NodeB, a WLAN access point, a Wi-Fi node, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include but is not limited to at least one of the following: a core network node, a core network function, a mobility management entity (Mobility Management Entity, MME), an access mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that, in the embodiments of this application, a core network device in an NR system is used as an example for description, and a specific type of the core network device is not limited.

With reference to the accompanying drawings, the following describes in detail, by using some embodiments and application scenarios thereof, a terminal discovery method and apparatus, a device, and a storage medium provided in the embodiments of this application.

FIG. 2 is a first schematic flowchart of a terminal discovery method according to an embodiment of this application. As shown in FIG. 2, the method includes the following steps.

Step 200: A first terminal obtains first configuration information related to a first service.

Step 210: The first terminal sends a first request message to a second terminal.

The first request message is used to request discovery of the second terminal supporting the first service, and the first service includes a ranging-based service and/or a sidelink positioning service.

Optionally, the first service represents a ranging-based service and/or a sidelink positioning service, that is, may be a ranging-based service, or a sidelink positioning service, or a ranging-based and sidelink positioning service.

Ranging may refer to determining a distance between two user equipments (User Equipment, UE) and/or a direction between one UE (that is, a target UE) and another UE (that is, an observer UE) through direct device connection. In a case of 3D, the direction includes a horizontal direction and a vertical direction. Some ranging-based services may require only distance measurement, some may require only direction measurement, and others may require distance and direction measurement.

The ranging-based service can be used in various vertical fields, such as consumers, smart homes, smart cities, intelligent transportation, smart retail, and industry 4.0. For example:

Control on smart home television: based on a distance between the UE and a television reference point, a direction from the television reference point to the UE, and a direction from the UE to the television reference point, the smart television can present a television screen area pointed by the UE, so as to determine a position where the cursor is placed and content selected by the user.

Granting remote access permission: a distance between a visitor holding UE2 and a ranging-capable door can be remotely monitored through a mobile phone UE1, so as to determine when to unlock the door to allow access of the visitor.

Ranging may refer to determining a distance between two or more UEs and/or a direction and/or relative positioning between one UE (that is, target UE) and another UE (a reference UE) through a PC5 interface.

Sidelink positioning: UE positioning over PC5.

Positioning: a function of detecting a geographical location and optional speed (for example, a mobile terminal).

Relative location: estimating a location of the UE relative to another network element or another UE.

The first service may be relative information (such as a relative location) between the first terminal and another terminal that the first terminal hopes to obtain, or may be absolute information (such as a geographical location and velocity); or may be relative information between the first terminal and a specific network device (other network elements, which can be understood as a network-side device, a base station, an RSU, or the like) that the first terminal hopes to obtain, or absolute information.

Optionally, the first terminal may obtain the first configuration information related to the first service, and the first configuration information is used to configure, for the first terminal, information required by the first terminal during execution of the first service.

Optionally, when needing to discover a second terminal supporting the first service, the first terminal may send the first request message to the second terminal. After receiving the first request message, the second terminal may know that the first terminal needs to discover a terminal supporting the first service, so that the terminal supporting the first service can discover another terminal supporting the first service.

Optionally, the first network side does not need to send the first configuration information to the first terminal each time the first service is executed. An occasion at which the first network side sends the first configuration information to the first terminal is not limited in this embodiment of this application.

In an implementation, when the first terminal registers to the first network side, the first network side sends the first configuration information to the first terminal.

In another implementation, the first terminal may request at any time to obtain or update the first configuration information.

In another implementation, the first configuration information is configured in the first terminal in a preconfigured manner.

In this embodiment of this application, the configuration information related to a ranging-based service and/or sidelink positioning service is obtained to perform the ranging-based service and/or sidelink positioning service. In a case that a terminal supporting the ranging-based service and/or sidelink positioning service needs to be discovered, the first request message is transmitted, so that one terminal supporting the ranging-based service and/or sidelink positioning service can discover another terminal supporting ranging-based service and/or sidelink positioning service to obtain the ranging-based service and/or sidelink positioning service.

Optionally, the first request message includes at least one of the following:
first indication information, where the first indication information is used to indicate that the first request message is used for the first service;
third indication information, where the third indication information is used to indicate the second terminal to send second assistance information, and the second assistance information is used to assist the first terminal in discovering the second terminal that supports the first service;
a first message type, where the first message type is used for indicating a message type of the first request message;
a terminal identifier of the first terminal, where the terminal identifier includes at least one of the following: an identity identifier, a device identifier, and a logical identifier;
a terminal identifier of the second terminal;
first service information, where the first service information is used to indicate information about a service requested by the first terminal;
first assistance information, where the first assistance information is used to assist the first terminal in discovering the second terminal that supports the first service;
a reference signal transmission mode; or
a result determining manner.

Optionally, the first request message may include any one or more of the following (a) to (i):
(a) first indication information, where the first indication information is used to indicate that the first request message is used for the first service; where
   in an implementation, the first indication information may be one bit in length, where bit 0 indicates that the first indication information indicates the first request message not used for the first service; and bit 1 indicates that the first indication information indicates the first request message being used for the first service;
   or
(b) third indication information, where the third indication information is used to indicate the second terminal to send second assistance information, and the second assistance information is used to assist the first terminal in discovering the second terminal that supports the first service; where
   in an implementation, the first terminal sends the third indication information through the first request message, indicating the second terminal to send the second assistance information; after receiving the third indication information, the second terminal may send the second assistance information to the first terminal, for example, sending the second assistance information to the first terminal through the first request response message; and after receiving the second assistance information, the first terminal may determine, based on the second assistance information, whether the second terminal supports the first service;
   or
(c) a first message type, where the first message type is used for indicating a message type of the first request message; where
   in an implementation, message types of different messages may include: a first service discovery request message and a first service discovery request response message; and
   in an implementation, the first message type is used to directly indicate a message type of a carrying message being the first service discovery request message;
   or
(d) a terminal identifier of the first terminal, where the terminal identifier of the first terminal includes at least one of the following: an identity identifier of the first terminal, a device identifier of the first terminal, and a logical identifier of the first terminal; where
   the logical identifier of the first terminal is a logical identifier capable of uniquely identifying the first terminal and assigned by the network or application server, for example, a specific string combination, a layer-2 ID (layer-2 ID), a terminal identifier related to service information, and a terminal identifier managed by the application layer and/or assigned by the application layer;
   or
(e) a terminal identifier of the second terminal, where the terminal identifier of the second terminal includes at least one of the following: an identity identifier of the second terminal, a device identifier of the second terminal, and a logical identifier of the second terminal; where
   the logical identifier of the second terminal is a logical identifier capable of uniquely identifying the second terminal and assigned by the network or application server, for example, a specific string combination, a layer-2 ID (layer-2 ID), a terminal identifier related to service information, and a terminal identifier managed by the application layer and/or assigned by the application layer;
   or
(f) first service information, where the first service information is used to indicate information about a service requested by the first terminal;
   or
(g) first assistance information, where the first assistance information is used to assist the first terminal in discovering the second terminal that supports the first service;
   or
(h) a reference signal transmission mode;
   or
(i) a result determining manner.

In an implementation, the first request message may be a PROSE PC5 DISCOVERY message in the existing mechanism.

In an implementation, the first request message may be a RANGING PC5 DISCOVERY message, that is, a new message different from an existing message.

Optionally, the first assistance information includes at least one of the following: reference signal information of the first terminal, algorithm information of the first terminal, or measurement requirement information of the first terminal.

Optionally, the first assistance information may include reference signal information of the first terminal.

Optionally, the first assistance information may include algorithm information of the first terminal.

Optionally, the first assistance information may include measurement requirement information of the first terminal.

Optionally, the first assistance information may include reference signal information of the first terminal and algorithm information of the first terminal.

Optionally, the first assistance information may include reference signal information of the first terminal and measurement requirement information of the first terminal.

Optionally, the first assistance information may include algorithm information of the first terminal and measurement requirement information of the first terminal.

Optionally, regardless of whether the first assistance information includes one or more items, when the first terminal or the second terminal implements discovery of a terminal supporting the first service based on the first assistance information, all or part of the items included in the first assistance information can be used. Optionally, the algorithm information of the first terminal is algorithm information used by the first terminal for execution of the first service, and the algorithm information includes at least one of the following: an algorithm name, an algorithm identifier, an algorithm parameter, an algorithm precision, and the like.

Optionally, the reference signal information of the first terminal may indicate information about a reference signal used by the first terminal during use of the ranging and positioning service, including at least one of the following: a name of the reference signal, an identifier of the reference signal, a frequency of the reference signal, a period of the reference signal, a power of the reference signal, and accuracy of the reference signal.

Optionally, the measurement requirement information of the first terminal includes measurement accuracy and/or quality of service (Quality of Service, QoS) information.

Optionally, the first service information includes at least one of the following: a service code corresponding to the first terminal, a service identifier corresponding to the first terminal, or a service type corresponding to the first terminal.

Optionally, the first service information may include at least one of the following:
a service code corresponding to the first terminal, where the service code corresponding to the first terminal is used for at least one of the following: identifying that the first terminal needs to use the first service, identifying that the first terminal is authorized to use the first service, or verifying that other terminals are authorized to use the first service;
a service identifier corresponding to the first terminal, where the service identifier indicates that use of the first service is authorized for the identified service; and
a service type corresponding to the first terminal.

Optionally, the first request message further includes address information of the first terminal and/or address information of the second terminal; or
the address information of the first terminal and/or the address information of the second terminal are sent along with the first request message.

Optionally, the first terminal may send the address information of the first terminal to the second terminal.

Optionally, the first terminal may send the address information of the second terminal to the second terminal.

Optionally, the first terminal may send the address information of the first terminal and the address information of the second terminal to the second terminal.

Optionally, the address information of the first terminal may be included in the first request message, or may be sent along with the first request message but not being included in the first request message.

Optionally, the address information of the second terminal may be included in the first request message, or may be sent along with the first request message but not being included in the first request message.

Optionally, the address information of the first terminal and the address information of the second terminal may be included in the first request message, or may be sent along with the first request message but not being included in the first request message.

Optionally, after the first terminal sends the first request message to the second terminal, if the second terminal determines, based on the first request message, that both the first terminal and the second terminal support the first service, the second terminal can directly initiate a process related to the first service. In this case, after the first terminal sends the first request message to the second terminal and in a case that the second terminal starts the first service, the first terminal can directly enter the process related to the first service with the second terminal. It should be noted that this embodiment of this application does not limit the process of executing the first service.

Optionally, after the sending, by the first terminal, a first request message to a second terminal, the method further includes:
receiving, by the first terminal, a first request response message sent by the second terminal, where the first request response message is used to indicate that the second terminal has received the first request message of the first terminal.

Optionally, after the first terminal sends the first request message to the second terminal, the first request response message sent by the second terminal can be received, where the first request response message is used to indicate that the second terminal has received the first request message of the first terminal.

Optionally, the first request response message includes at least one of the following:
second indication information, used for indicating that the first request response message is used for the first service;
second message type, used for indicating a message type of the first request response message;
second service information, where the second service information is used to indicate information about a service provided by the second terminal;
a terminal identifier of the first terminal;
a terminal identifier of the second terminal;
second assistance information, where the second assistance information is used to assist the first terminal in discovering the second terminal that supports the first service;
a reference signal transmission mode; or
a result determining manner.

Optionally, the first request response message may include any one or more of the following (j) to (q):
(j) second indication information, where the second indication information is used to indicate that the first request response message is used for the first service;
   or
(k) second message type, where the second message type is used for indicating a message type of the first request response message;
   in an implementation, message types of different messages may include: a first service discovery request message and a first service discovery request response message; and
   in an implementation, the second message type is used to directly indicate a message type of a carrying message being the first service discovery request response message;
   or
(l) second service information, where the second service information is used to indicate information about a service provided by the second terminal;
   or
(m) a terminal identifier of the first terminal, where the terminal identifier of the first terminal includes at least one of the following: an identity identifier of the first terminal, a device identifier of the first terminal, and a logical identifier of the first terminal; and
   the logical identifier of the first terminal is a logical identifier capable of uniquely identifying the second terminal and assigned by the network or application server, for example, a specific string combination, a layer-2 ID (layer-2 ID), a terminal identifier related to service information, and a terminal identifier managed by the application layer and/or assigned by the application layer;
   or
(n) a terminal identifier of the second terminal, where the terminal identifier of the second terminal includes at least one of the following: an identity identifier of the second terminal, a device identifier of the second terminal, and a logical identifier of the second terminal; and
   the logical identifier of the second terminal is a logical identifier capable of uniquely identifying the second terminal and assigned by the network or application server, for example, a specific string combination, a layer-2 ID (layer-2 ID), a terminal identifier related to service information, and a terminal identifier managed by the application layer and/or assigned by the application layer;
   or
(o) second assistance information, where the second assistance information is used to assist the first terminal in discovering the second terminal that supports the first service;
   or
(p) a reference signal transmission mode;
   or
(q) a result determining manner.

Optionally, the second service information includes at least one of the following: a service code corresponding to the second terminal, a service identifier corresponding to the second terminal, or a service type corresponding to the second terminal.

Optionally, the second service information may include at least one of the following:
a service code corresponding to the second terminal, where the service code corresponding to the second terminal is used for at least one of the following: identifying that the second terminal needs to use the first service, identifying that the second terminal is authorized to use the first service, or verifying that other terminals are authorized to use the first service;
a service identifier corresponding to the second terminal, where the service identifier indicates that use of the first service is authorized for the identified service; and
a service type corresponding to the second terminal.

In an implementation, the first request response message includes the second service information, and can be also understood that the second terminal can provide the first service related to the second service information. For example, when the second service information is a service identifier, it can be understood that the second terminal can provide the first service related to a service identified by the service identifier.

Optionally, the first request response message further includes address information of the first terminal and/or address information of the second terminal; or
the address information of the first terminal and/or the address information of the second terminal are sent along with the first request response message.

Optionally, the second terminal may send the address information of the first terminal to the first terminal.

Optionally, the second terminal may send the address information of the second terminal to the first terminal.

Optionally, the second terminal may send the address information of the first terminal and the address information of the second terminal to the first terminal.

Optionally, the address information of the first terminal may be included in the first request response message, or may be sent along with the first request response message but not being included in the first request response message.

Optionally, the address information of the second terminal may be included in the first request response message, or may be sent along with the first request response message but not being included in the first request response message.

Optionally, the address information of the first terminal and the address information of the second terminal may be included in the first request response message, or may be sent along with the first request response message but not being included in the first request response message.

Optionally, the second assistance information includes at least one of the following: reference signal information of the second terminal, algorithm information of the second terminal, or measurement requirement information of the second terminal.

Optionally, the second assistance information may include reference signal information of the second terminal.

Optionally, the second assistance information may include algorithm information of the second terminal.

Optionally, the second assistance information may include measurement requirement information of the second terminal.

Optionally, the second assistance information may include reference signal information of the second terminal and algorithm information of the second terminal.

Optionally, the second assistance information may include reference signal information of the second terminal and measurement requirement information of the second terminal.

Optionally, the second assistance information may include algorithm information of the second terminal and measurement requirement information of the second terminal.

Optionally, regardless of whether the second assistance information includes one or more items, when the first terminal or the second terminal implements discovery of a terminal supporting the first service based on the second assistance information, all or part of the items included in the second assistance information can be used.

Optionally, the algorithm information of the second terminal is algorithm information used by the second terminal for execution of the first service, and the algorithm information includes at least one of the following: an algorithm name, an algorithm identifier, an algorithm parameter, an algorithm precision, and the like.

Optionally, the reference signal information of the second terminal may indicate information about a reference signal used by the second terminal during use of the ranging and positioning service, including at least one of the following: a name of the reference signal, an identifier of the reference signal, a frequency of the reference signal, a period of the reference signal, a power of the reference signal, and accuracy of the reference signal.

Optionally, the measurement requirement information of the second terminal includes measurement accuracy and/or QoS information;

Optionally, the reference signal transmission mode includes at least one of the following:
the first terminal sends a reference signal;
the second terminal sends a reference signal;
the first terminal and the second terminal send a reference signal;
immediately sending a reference signal;
periodically sending a reference signal; or
an event triggers sending of a reference signal.

Optionally, the reference signal transmission mode includes any one or more of the following:
the first terminal sends a reference signal; or
the second terminal sends a reference signal; or
the first terminal and the second terminal send a reference signal; or
immediately sending a reference signal; or
periodically sending a reference signal; or
an event triggers sending of a reference signal.

Optionally, the result determining manner includes at least one of the following:
the first terminal determines a first result;
the second terminal determines the first result; or
the first terminal and the second terminal determine the first result.

In some embodiments, the reference signal transmission mode is associated with the result determining manner. For example, if the first terminal sets, in the first request message, the reference signal transmission mode to "the first terminal sends a reference signal", after the second terminal receives the first request message, the second terminal can infer that the "result determining manner" of the first service is "the second terminal determines the first result".

Optionally, the result determining manner includes any one or more of the following:
the first terminal determines a first result; or
the second terminal determines the first result; or
the first terminal and the second terminal determine the first result.

Optionally, the first result may be a result obtained by executing the first service, such as a distance between two or more UEs and/or a direction and/or relative positioning between one UE (that is, target UE) and another UE (that is, reference UE). Optionally, the first result may be a result corresponding to the first service related to the second terminal and obtained by the first terminal, and the first result may include at least one of the following:
absolute location information of the second terminal, relative location information of the second terminal with respect to the first terminal, accuracy information, or a measurement result of a second positioning reference signal.

Specifically, the absolute location information of the second terminal is, for example, a timing advance (Timing Advance, TA), a registration area (Registration Area, RA), a cell identifier (Identifier, ID), latitude and longitude, altitude, horizontal direction, or elevation direction.

The relative location information is, for example, a relative angle or a relative distance of the second terminal relative to the first terminal.

The accuracy information indicates accuracy information of the first result, which, for example, may include at least one of the following: result dimension information, measurement accuracy, and error information. The result dimension information is, for example, angle, meter, or centimeter. The measurement accuracy is, for example, high accuracy, ultra-high accuracy, and low accuracy. The error information includes: error accuracy information and error dimension information. The error information is, for example, high error, low error, and ultra-low error. The error dimension information is, for example, angle, meter, or centimeter.

The measurement result indicates a measurement result of the second positioning reference signal, for example, a signal strength, or a value of a specific measurement quantity obtained through calculation based on the second positioning reference signal.

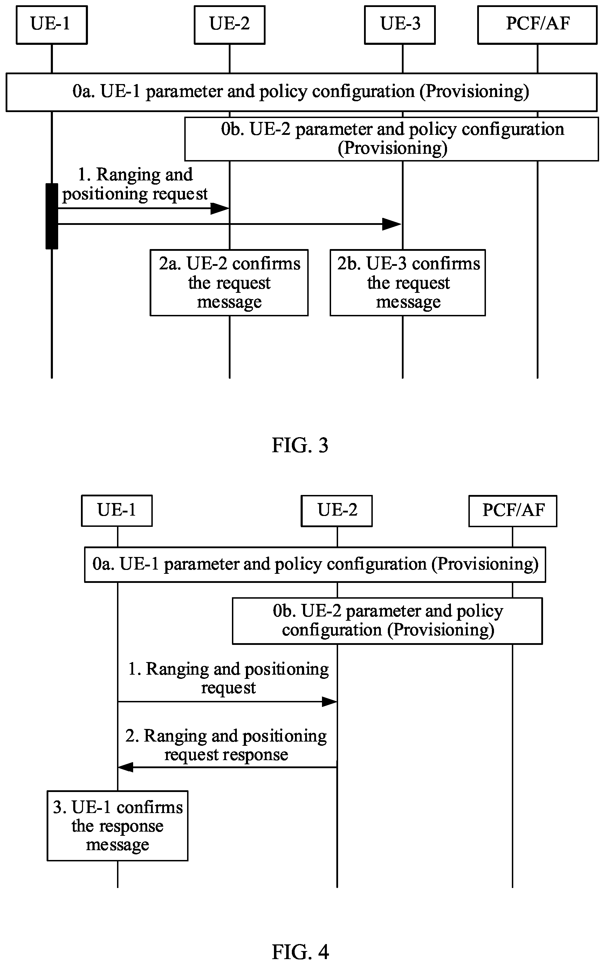

Optionally, FIG. 3 is a second schematic flowchart of a terminal discovery method according to an embodiment of this application. As shown in FIG. 3, a second terminal can determine, based on a first request message, whether a first terminal and the second terminal can perform a first service (the second terminal determines a first result). In this case, a first network side can send first configuration information (including a parameter and policy configuration of UE-1) to the first terminal (for example, UE-1 in FIG. 3), and a second network side can send second configuration information (including a parameter and policy configuration of UE-2 and a parameter and policy configuration of UE-3) to the second terminal (UE-2 and UE-3 in FIG. 3). The first terminal (for example, UE-1 in FIG. 3) can send a first request message (such as a ranging and positioning request) to the second terminal (for example, UE-2 and/or UE-3 in FIG. 3). After receiving the first request message, the second terminal can determine, based on the first request message, to perform the first service with the first terminal, and then directly initiate a process of executing the first service.

Optionally, FIG. 4 is a third schematic flowchart of a terminal discovery method according to an embodiment of this application. As shown in FIG. 4, a first terminal can determine whether a second terminal supports a first service (the first terminal and the second terminal determine a first result), and the second terminal can determine, based on a first request message, that both the first terminal and the second terminal support the first service. In this case, a first network side can send first configuration information (including a parameter and policy configuration of UE-1) to the first terminal (for example, UE-1 in FIG. 4), and a second network side can send second configuration information (including a parameter and policy configuration of UE-2) to the second terminal (for example, UE-2 in FIG. 4). The first terminal (for example, UE-1 in FIG. 4) can send a first request message (such as a ranging and positioning request) to the second terminal (for example, UE-2 in FIG. 4). After receiving the first request message, the second terminal can determine, based on the first request message, that the second terminal can perform the first service with the first terminal, and then send a first request message response. After receiving the first request message response, the first terminal can determine, based on the first request message response, that the second terminal also supports the first service.

The second terminal may determine that both the first terminal and the second terminal support the first service, based on at least one of the following: a first request message, an application layer indication, a network side indication, or pre-configuration information.

Optionally, a first network-side device and a second network-side device may be the same or different.

Optionally, after the receiving, by the first terminal, a first request response message sent by the second terminal, the method further includes:
performing, by the first terminal, a first operation based on the first request response message, where the first operation includes at least one of the following:
based on the second indication information and the first indication information, the first terminal determines that the second terminal supports the first service;
based on the terminal identifier of the first terminal in the first request response message and the terminal identifier of the first terminal in the first request message, the first terminal determines that the second terminal supports the first service;
based on the terminal identifier of the second terminal in the first request response message and the terminal identifier of the second terminal in the first request message, the first terminal determines that the second terminal supports the first service;
based on the second service information in the first request response message and the first service information in the first request message, the first terminal determines that the second terminal supports the first service;
based on the reference signal information of the second terminal in the first request response message and the reference signal information of the first terminal in the first request message, the first terminal determines that the second terminal supports the first service;
based on the algorithm information of the second terminal in the first request response message and the algorithm information of the first terminal in the first request message, the first terminal determines that the second terminal supports the first service; and
based on the measurement requirement information of the second terminal in the first request response message and the measurement requirement information of the first terminal in the first request message, the first terminal determines that the second terminal supports the first service.

Optionally, that the first terminal determines, based on the second indication information and the first indication information, that the second terminal supports the first service may be: in a case that the first terminal determines the second indication information matching the first indication information, determining that the second terminal supports the first service.

Optionally, that the first terminal determines, based on the terminal identifier of the first terminal in the first request response message and the terminal identifier of the first terminal in the first request message, that the second terminal supports the first service may include: in a case that the first terminal determines the terminal identifier of the first terminal in the first request response message matching the terminal identifier of the first terminal in the first request message, determining that the second terminal supports the first service.

Optionally, that the first terminal determines, based on the terminal identifier of the second terminal in the first request response message and the terminal identifier of the second terminal in the first request message, that the second terminal supports the first service may include: in a case that the first terminal determines the terminal identifier of the second terminal in the first request response message matching the terminal identifier of the second terminal in the first request message, determining that the second terminal supports the first service.

Optionally, that the first terminal determines, based on the second service information in the first request response message and the first service information in the first request message, that the second terminal supports the first service may include: in a case that the first terminal determines the second service information in the first request response message matching the first service information in the first request message, determining that the second terminal supports the first service.

Optionally, that the first terminal determines, based on the reference signal information of the second terminal in the first request response message and the reference signal information of the first terminal in the first request message, that the second terminal supports the first service may include: in a case that the first terminal determines the reference signal information of the second terminal in the first request response message matching the reference signal information of the first terminal in the first request message, determining that the second terminal supports the first service. Optionally, that the first terminal determines, based on the algorithm information of the second terminal in the first request response message and the algorithm information of the first terminal in the first request message, that the second terminal supports the first service may include: in a case that the first terminal determines the algorithm information of the second terminal in the first request response message matching the algorithm information of the first terminal in the first request message, determining that the second terminal supports the first service. Optionally, that the first terminal determines, based on the measurement requirement information of the second terminal in the first request response message and the measurement requirement information of the first terminal in the first request message, that the second terminal supports the first service may include: in a case that the first terminal determines the measurement requirement information of the second terminal in the first request response message matching the measurement requirement information of the first terminal in the first request message, determining that the second terminal supports the first service.

Optionally, matching may be the same or similar, and similarity may be that corresponding values belong to a same range or indicated content has the same substantive meaning.

Optionally, the first terminal determines that the second indication information matches the first indication information.

Optionally, in a case that the first terminal determines the terminal identifier of the first terminal in the first request response message matching the terminal identifier of the first terminal in the first request message, it can be determined that the second terminal supports the first service.

Optionally, in a case that the first terminal determines the terminal identifier of the second terminal in the first request response message matching the terminal identifier of the second terminal in the first request message, it can be determined that the second terminal supports the first service.

Optionally, in a case that the first terminal determines the second service information in the first request response message matching the first service information in the first request message, it can be determined that the second terminal supports the first service.

Optionally, in a case that the first terminal determines the reference signal information of the second terminal in the first request response message matching the reference signal information of the first terminal in the first request message, it can be determined that the second terminal supports the first service.

Optionally, in a case that the first terminal determines the algorithm information of the second terminal in the first request response message matching the algorithm information of the first terminal in the first request message, it can be determined that the second terminal supports the first service.

Optionally, in a case that the first terminal determines the measurement requirement information of the second terminal in the first request response message matching the measurement requirement information of the first terminal in the first request message, it can be determined that the second terminal supports the first service.

Optionally, the first assistance information further includes at least one of the following:
capability information of the first terminal;
location information of the first terminal;
address information of the first terminal;
security information of the first terminal; and
measurement information of the first terminal.

The second assistance information further includes at least one of the following:
capability information of the second terminal;
location information of the second terminal;
address information of the second terminal;
security information of the second terminal; and
measurement information of the second terminal.

Optionally, the first assistance information further includes any one or more of the following (r1) to (r5):
(r1) capability information of the first terminal; where
   in an implementation, the capability information of the first terminal indicates that the first terminal has a capability of supporting the first service; the capability information includes a capability of supporting distance measurement and/or calculation; a capability of supporting direction measurement and/or calculation; a capability of supporting high-accuracy distance measurement and/or calculation; a capability of supporting high-accuracy direction measurement and/or calculation; and a capability of supporting computing for the first service;
   or
(r2) location information of the first terminal;
   for example, absolute location information of the first terminal, such as TA, registration area RA, cell ID, latitude and longitude, altitude, horizontal direction angle (horizontal direction), and elevation direction angle (elevation direction); and
   relative location information of the first terminal, such as a relative angle (including a horizontal direction angle and an elevation direction angle) and relative distance of the first terminal with respect to an assistance node; where
   it is worth mentioning that the assistance node is other communication devices than the first terminal and the second terminal;
   for example, a third terminal other than the first terminal and the second terminal; or, a public infrastructure, such as roadside unit; or a common reference system whose absolute location information is known by the first terminal and the second terminal, such as a street lamp;
   or
(r3) address information of the first terminal;
   for example, an IPv4 address of the first terminal, an IPv6 address of the first terminal, a port number of the first terminal, or an FQDN of the first terminal;
   or
(r4) security information of the first terminal;
   for example, an encryption key of the first terminal and/or a security parameter of the first terminal;
   or
(r5) measurement information of the first terminal; where
   the measurement information of the first terminal indicates an observation result of a specific reference signal, such as a signal strength, or a value of a specific measurement quantity obtained calculation based on a measurement signal.

Optionally, the second assistance information further includes any one or more of the following (s1) to (s5):
(s1) capability information of the second terminal; where
   in an implementation, the capability information of the second terminal indicates that the second terminal has a capability of supporting the first service; the capability information includes a capability of supporting distance measurement and/or calculation; a capability of supporting direction measurement and/or calculation; a capability of supporting high-accuracy distance measurement and/or calculation; a capability of supporting high-accuracy direction measurement and/or calculation; and a capability of supporting computing for the first service;
   or
(s2) location information of the second terminal;
   for example, absolute location information of the second terminal, such as TA, registration area RA, cell ID, latitude and longitude, altitude, horizontal direction angle (horizontal direction), and elevation direction angle (elevation direction); and
   relative location information of the second terminal, such as a relative angle (including a horizontal direction angle and an elevation direction angle) and relative distance of the second terminal with respect to the assistance node; where
   it is worth mentioning that the assistance node is other communication devices than the first terminal and the second terminal;
   for example, a third terminal other than the first terminal and the second terminal; or, a public infrastructure, such as roadside unit; or a common reference system whose absolute location information is known by the first terminal and the second terminal, such as a street lamp;
   or
(s3) address information of the second terminal;
   for example, an IPv4 address of the second terminal, an IPv6 address of the second terminal, a port number of the second terminal, or a fully qualified domain name (Fully Qualified Domain Name, FQDN) of the second terminal;
   or
(s4) security information of the second terminal;
   for example, an encryption key of the second terminal and/or a security parameter of the second terminal;
   or
(s5) measurement information of the second terminal; where
   the measurement information of the second terminal indicates an observation result of a specific reference signal, such as a signal strength, or a value of a specific measurement quantity obtained calculation based on a measurement signal.

Optionally, the first configuration information includes at least one of the following:
validity time of the first configuration information;
first authorization information of the first terminal, where the first authorization information of the first terminal is used to indicate a discovery method type authorized when the first terminal is served by a radio access network;
a first authorization list of the first terminal, where the first authorization list of the first terminal is used to indicate a PLMN list to be discovered when the first terminal is served by the radio access network;
second authorization information of the first terminal, where the second authorization information of the first terminal is used to indicate a discovery method type authorized when the first terminal is not served by the radio access network;
first service information, where the first service information is used to indicate information about a service requested by the first terminal;
a terminal identifier of the first terminal, where the terminal identifier includes at least one of the following: an identity identifier, a device identifier, and a logical identifier;
security information of the first terminal, where the security information indicates a security parameter related to the first service;
algorithm information of the first terminal, where the algorithm information is used for indicating an algorithm required during use of the first service;
reference signal information of the first terminal, where the reference signal information is used for indicating a reference signal required during use of the first service;
measurement requirement information of the first terminal;
first authorization indication information, where the first authorization indication information is used to authorize the first terminal to send a reference signal; or
second authorization indication information, where the second authorization indication information is used to authorize the first terminal to determine a reference signal result.

Optionally, the first network-side device may configure in advance, for the first terminal, a parameter or policy (which may be referred to as first configuration information) related to the first service.

The first configuration information may include any one or more of the following (t1) to (t12):
(t1) validity time of the first configuration information; where
   optionally, the validity time indicates a validity time of the first configuration information; and
   optionally, after the validity time expires, the first configuration information becomes invalid;
   or
(t2) first authorization information of the first terminal, where the first authorization information of the first terminal is used to indicate a discovery method type authorized when the first terminal is served by a radio access network;
   optionally, the first authorization information of the first terminal may be whether the first terminal is authorized to use the discovery service related to the first service when being served by the radio access network RAN (served by RAN); where whether to be authorized to use the discovery service related to the first service may, for example, include any one of the following (t21) and (t22):
(t21) the first terminal is authorized to use the discovery service related to the first service by using a model B, where the model B represents a discovery mode that the second terminal is to send a first request response message based on the first request message; and
(t22) the first terminal is authorized to use the discovery service related to the first service by using a model A, where the model A represents a discovery mode that the second terminal is not to send a first request response message;
   or
(t3) a first authorization list of the first terminal, where the first authorization list of the first terminal is used to indicate a PLMN list to be discovered when the first terminal is served by the radio access network;
   optionally, the first authorization list of the first terminal may be a PLMN list authorized to use the first service when the service is provided by the RAN; and the PLMN list authorized to use the first service includes at least one of the following (t31) to (t34):
(t31) a PLMN list that the first terminal is authorized to discover using model A announcing, where a public land mobile network (Public Land Mobile Network, PLMN) includes at least one PLMN ID;
(t32) a PLMN list that the first terminal is authorized to discover using model A monitoring, where the PLMN list includes at least one PLMN ID;
(t33) a PLMN list that the first terminal is authorized to discover using model B discoverer operation, where the PLMN list includes at least one PLMN ID; and
(t34) a PLMN list that the first terminal is authorized to discover using model B discoverer operation, where the PLMN list includes at least one PLMN ID;
   or
(t4) second authorization information of the first terminal, where the second authorization information of the first terminal is used to indicate a discovery method type authorized when the first terminal is not served by the radio access network;
   optionally, the second authorization information of the first terminal may be whether to be authorized to use the discovery service related to the first service when the first terminal is not served by the radio access network; where whether to be authorized to use the discovery service related to the first service may, for example, include any one of the following (t41) and (t42):
(t41) the first terminal is authorized to use the discovery service related to the first service by using a model A; and
(t42) the first terminal is authorized to use the discovery service related to the first service by using a model B;
   or
(t5) first service information, where the first service information is used to indicate information about a service requested by the first terminal;
   or
(t6) a terminal identifier of the first terminal, where the terminal identifier of the first terminal includes at least one of the following: an identity identifier of the first terminal, a device identifier of the first terminal, and a logical identifier of the first terminal; for example, any one or more of a subscription concealed identifier (Subscription Concealed Identifier, SUCI) of the first terminal, a globally unique temporary identifier (Globally Unique Temporary Identifier, GUTI) of the first terminal, an international mobile subscriber identity (International Mobile Subscriber Identity, IMSI) of the first terminal, a permanent equipment identifier (Permanent Equipment Identifier, PEI) of the first terminal, an international mobile equipment identity number (International Mobile Equipment Identity number, IMEI) of the first terminal, a subscription permanent identifier(Subscription Permanent Identifier, SUPI) of the first terminal, a temporary mobile subscription identifier (Temporary Mobile Subscription Identifier, TMSI) of the first terminal, a generic public subscription identifier (Generic Public Subscription Identifier, GPSI) of the first terminal, and a 5G S-temporary mobile subscription identifier (5G S-Temporary Mobile Subscription Identifier, 5G-S-TMSI) of the first terminal;
   or
(t7) security information of the first terminal, where the security information indicates a security parameter related to the first service;
   for example, an encryption key of the first terminal and/or a security parameter of the first terminal;
   or
(t8) algorithm information of the first terminal, where the algorithm information is used for indicating an algorithm required during use of the first service;
   optionally, the algorithm information of the first terminal is algorithm information used by the first terminal for execution of the first service, and the algorithm information includes at least one of the following: an algorithm name, an algorithm identifier, an algorithm parameter, an algorithm precision, and the like; and it should be noted that the algorithm information may sometimes be called method information;
   or
(t9) reference signal information of the first terminal, where the reference signal information is used for indicating a reference signal required during use of the first service;
   optionally, the reference signal information of the first terminal may indicate information about a reference signal used by the first terminal during use of the ranging and positioning service, including at least one of the following: a name of the reference signal, an identifier of the reference signal, a frequency of the reference signal, a period of the reference signal, a power of the reference signal, and accuracy of the reference signal;
   or
(t10) measurement requirement information of the first terminal; where
   optionally, the measurement requirement information of the first terminal includes measurement accuracy and/or QoS information;
   or
(t11) first authorization indication information, where the first authorization indication information is used to authorize the first terminal to send a reference signal;
   or
(t12) second authorization indication information, where the second authorization indication information is used to authorize the first terminal to determine a reference signal result.

Optionally, the method further includes:
determining, by the first terminal, a reference signal transmission mode based on the first authorization indication information.

Optionally, the reference signal transmission mode that can be determined by the first terminal based on the first authorization indication information is any one or more of the following:
the first terminal sends a reference signal;
the second terminal sends a reference signal;
the first terminal and the second terminal send a reference signal;
immediately sending a reference signal;
periodically sending a reference signal; or
an event triggers sending of a reference signal.

Optionally, the method further includes:
determining, by the first terminal, a result determining manner based on the second authorization indication information.

Optionally, the result determining manner that can be determined by the first terminal based on the second authorization indication information is any one or more of the following:
the first terminal determines a first result;
the second terminal determines the first result; or
the first terminal and the second terminal determine the first result.

Optionally, after the sending, by the first terminal, a first request message to a second terminal, the method further includes:
sending, by the first terminal, a second request message, where the second request message is used to request to establish a PC5 connection to the second terminal.

Optionally, after the first terminal sends the first request message to the second terminal, the first terminal may send the second request message, where the second request message is used to request to establish a PC5 connection to the second terminal.

In this embodiment of this application, the configuration information related to a ranging-based service and/or sidelink positioning service is obtained to perform the ranging-based service and/or sidelink positioning service. In a case that a terminal supporting the ranging-based service and/or sidelink positioning service needs to be discovered, the first request message is transmitted, so that one terminal supporting the ranging-based service and/or sidelink positioning service can discover another terminal supporting ranging-based service and/or sidelink positioning service to obtain the ranging-based service and/or sidelink positioning service.

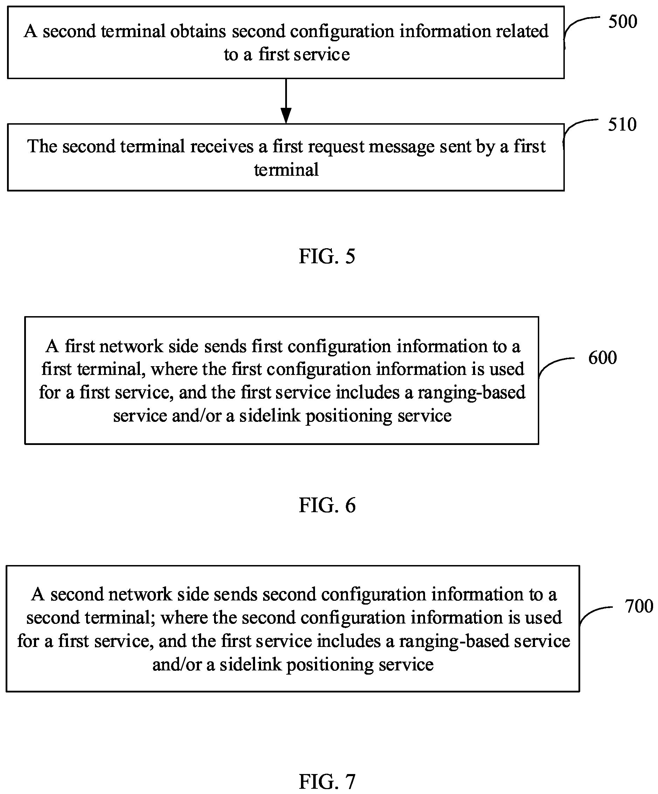

FIG. 5 is a fourth schematic flowchart of a terminal discovery method according to an embodiment of this application. The method includes the following steps:
Step 500: A second terminal obtains second configuration information related to a first service.
Step 510: The second terminal receives a first request message sent by a first terminal.

The first request message is used for discovering a second terminal that supports the first service, and the first service is a terminal discovery related service.

Optionally, the first service may be relative information (such as relative position) between the first terminal and another terminal that the first terminal hopes to obtain, or may be absolute information (such as a geographical location and velocity), or may be relative information between the first terminal and a specific network device (other network elements, which can be understood as a network-side device, a base station, an RSU, or the like) that the first terminal hopes to obtain, or absolute information.

Optionally, the second terminal may obtain the second configuration information related to the first service, and the second configuration information is used to configure, for the second terminal, information required by the second terminal during execution of the first service.

Optionally, when needing to discover a second terminal supporting the first service, the first terminal may send the first request message to the second terminal. After receiving the first request message, the second terminal may know that the first terminal needs to discover a terminal supporting the first service, so that the terminal supporting the first service can discover another terminal supporting the first service.

Optionally, the second network side does not need to send the second configuration information to the second terminal each time the first service is executed. An occasion at which the second network side sends the second configuration information to the second terminal is not limited in this embodiment.

In an implementation, when the second terminal registers to the second network side, the second network side sends the second configuration information to the second terminal.

In another implementation, the second terminal may request at any time to obtain or update the second configuration information.

In another implementation, the second configuration information is configured in the second terminal in a preconfigured manner.

In this embodiment of this application, the configuration information related to a ranging-based service and/or sidelink positioning service is obtained to perform the ranging-based service and/or sidelink positioning service. In a case that a terminal supporting the ranging-based service and/or sidelink positioning service needs to be discovered, the first request message is transmitted, so that one terminal supporting the ranging-based service and/or sidelink positioning service can discover another terminal supporting ranging-based service and/or sidelink positioning service to obtain the ranging-based service and/or sidelink positioning service.

Optionally, after the receiving, by the second terminal, a first request message sent by a first terminal, the method further includes:
sending, by the second terminal, a third request message, where the third request message is used to request to establish a PC5 connection to the first terminal.

Optionally, after the second terminal receives the first request message sent by the first terminal, the second terminal may send the third request message, where the third request message is used to request to establish a PC5 connection to the first terminal.

Optionally, the first request message includes at least one of the following:
first indication information, where the first indication information is used to indicate that the first request message is used for the first service;
third indication information, where the third indication information is used to indicate the second terminal to send second assistance information, and the second assistance information is used to assist the first terminal in discovering the second terminal that supports the first service;
a first message type, where the first message type is used for indicating a message type of the first request message;
a terminal identifier of the first terminal, where the terminal identifier includes at least one of the following: an identity identifier, a device identifier, and a logical identifier;
a terminal identifier of the second terminal;
first service information, where the first service information is used to indicate information about a service requested by the first terminal;
first assistance information, where the first assistance information is used to assist the first terminal in discovering the second terminal that supports the first service;
a reference signal transmission mode; or
a result determining manner.

Optionally, the first request message may include any one or more of the following (a) to (i):
(a) first indication information, where the first indication information is used to indicate that the first request message is used for the first service; where in an implementation, the first indication information may be one bit in length, where bit 0 indicates that the first indication information indicates the first request message not used for the first service; and bit 1 indicates that the first indication information indicates the first request message being used for the first service;
   or
(b) third indication information, where the third indication information is used to indicate the second terminal to send second assistance information, and the second assistance information is used to assist the first terminal in discovering the second terminal that supports the first service; where
   in an implementation, the first terminal sends the third indication information through the first request message, indicating the second terminal to send the second assistance information; after receiving the third indication information, the second terminal may send the second assistance information to the first terminal, for example, sending the second assistance information to the first terminal through the first request response message; and after receiving the second assistance information, the first terminal may determine, based on the second assistance information, whether the second terminal supports the first service;
   or
(c) a first message type, where the first message type is used for indicating a message type of the first request message; where
   in an implementation, message types of different messages may include: a first service discovery request message and a first service discovery request response message; and
   in an implementation, the first message type is used to directly indicate a message type of a carrying message being the first service discovery request message;
   or
(d) a terminal identifier of the first terminal, where the terminal identifier of the first terminal includes at least one of the following: an identity identifier of the first terminal, a device identifier of the first terminal, and a logical identifier of the first terminal; where
   the logical identifier is a logical identifier capable of uniquely identifying a terminal and assigned by the network or application server, for example, a specific string combination, a layer-2 ID (layer-2 ID), a terminal identifier related to service information, and a terminal identifier managed by the application layer and/or assigned by the application layer;
   or
(e) a terminal identifier of the second terminal, where the terminal identifier of the second terminal includes at least one of the following: an identity identifier of the second terminal, a device identifier of the second terminal, and a logical identifier of the second terminal;
   or
(f) first service information, where the first service information is used to indicate information about a service requested by the first terminal;
   or
(g) first assistance information, where the first assistance information is used to assist the first terminal in discovering the second terminal that supports the first service;
   or
(h) a reference signal transmission mode;
   or
(i) a result determining manner.

In an implementation, the first request message may be a PROSE PC5 DISCOVERY message in the existing mechanism.

In an implementation, the first request message may be a RANGING PC5 DISCOVERY message, that is, a new message different from an existing message.

Optionally, the first assistance information includes at least one of the following: reference signal information of the first terminal, algorithm information of the first terminal, or measurement requirement information of the first terminal.

Optionally, the first assistance information may include reference signal information of the first terminal.

Optionally, the first assistance information may include algorithm information of the first terminal.

Optionally, the first assistance information may include measurement requirement information of the first terminal.

Optionally, the first assistance information may include reference signal information of the first terminal and algorithm information of the first terminal.

Optionally, the first assistance information may include reference signal information of the first terminal and measurement requirement information of the first terminal.

Optionally, the first assistance information may include algorithm information of the first terminal and measurement requirement information of the first terminal.

Optionally, regardless of whether the first assistance information includes one or more items, when the first terminal or the second terminal implements discovery of a terminal supporting the first service based on the first assistance information, all or part of the items included in the first assistance information can be used. Optionally, the algorithm information of the first terminal is algorithm information used by the first terminal for execution of the first service, and the algorithm information includes at least one of the following: an algorithm name, an algorithm identifier, an algorithm parameter, an algorithm precision, and the like.

Optionally, the reference signal information of the first terminal may indicate information about a reference signal used by the first terminal during use of the ranging and positioning service, including at least one of the following: a name of the reference signal, an identifier of the reference signal, a frequency of the reference signal, a period of the reference signal, a power of the reference signal, and accuracy of the reference signal.

Optionally, the measurement requirement information of the first terminal includes measurement accuracy and/or QoS information.

Optionally, the first service information includes at least one of the following: a service code corresponding to the first terminal, a service identifier corresponding to the first terminal, or a service type corresponding to the first terminal.

Optionally, the first service information may include at least one of the following:
a service code corresponding to the first terminal, where the service code corresponding to the first terminal is used for at least one of the following: identifying that the first terminal needs to use the first service, identifying that the first terminal is authorized to use the first service, or verifying that other terminals are authorized to use the first service;
a service identifier corresponding to the first terminal, where the service identifier indicates that use of the first service is authorized for the identified service; and
a service type corresponding to the first terminal.

Optionally, the first request message further includes address information of the first terminal and/or address information of the second terminal; or
the address information of the first terminal and/or the address information of the second terminal are sent along with the first request message.

Optionally, the first terminal may send the address information of the first terminal to the second terminal.

Optionally, the first terminal may send the address information of the second terminal to the second terminal.

Optionally, the first terminal may send the address information of the first terminal and the address information of the second terminal to the second terminal.

Optionally, the address information of the first terminal may be included in the first request message, or may be sent along with the first request message but not being included in the first request message.

Optionally, the address information of the second terminal may be included in the first request message, or may be sent along with the first request message but not being included in the first request message.

Optionally, the address information of the first terminal and the address information of the second terminal may be included in the first request message, or may be sent along with the first request message but not being included in the first request message.

Optionally, after the first terminal sends the first request message to the second terminal, if the second terminal determines, based on the first request message, that both the first terminal and the second terminal support the first service, the second terminal can directly initiate a process related to the first service. In this case, after the first terminal sends the first request message to the second terminal and in a case that the second terminal starts the first service, the first terminal can directly enter the process related to the first service with the second terminal.

Optionally, the second configuration information includes at least one of the following:
validity time of the second configuration information;
first authorization information of the second terminal, where the first authorization information of the second terminal is used to indicate a discovery method type authorized when the second terminal is served by a radio access network;
a first authorization list of the second terminal, where the first authorization list of the second terminal is used to indicate a PLMN list to be discovered when the second terminal is served by the radio access network;
second authorization information of the second terminal, where the second authorization information of the second terminal is used to indicate a discovery method type authorized when the second terminal is not served by the radio access network;
second service information, where the second service information is used to indicate information about a service requested by the second terminal;
a terminal identifier of the second terminal, where the terminal identifier of the second terminal includes at least one of the following: an identity identifier, a device identifier, and a logical identifier;
security information of the second terminal, where the security information indicates a security parameter related to the first service;
algorithm information of the second terminal, where the algorithm information is used for indicating an algorithm required during use of the first service;
reference signal information of the second terminal, where the reference signal information is used for indicating a reference signal required during use of the first service;
measurement requirement information of the second terminal;
third authorization indication information, where the third authorization indication information is used to authorize the second terminal to send a reference signal; or
fourth authorization indication information, where the fourth authorization indication information is used to authorize the second terminal to determine a reference signal result.

Optionally, the second network-side device may configure in advance, for the second terminal, a parameter or policy (which may be referred to as second configuration information) related to the first service.

The second configuration information may include any one or more of the following (u1) to (u12):
(u1) validity time of the second configuration information; where
   optionally, the validity time indicates a validity time of the second configuration information; and
   optionally, after the validity time expires, the second configuration information becomes invalid;
   or
(u2) first authorization information of the second terminal, where the first authorization information of the second terminal is used to indicate a discovery method type authorized when the second terminal is served by a radio access network;
   optionally, the first authorization information of the second terminal may be whether the second terminal is authorized to use the discovery service related to the first service when being served by the radio access network RAN (served by RAN); where whether to be authorized to use the discovery service related to the first service may, for example, include any one of the following (u21) and (u22):
(u21) the second terminal is authorized to use the discovery service related to the first service by using a model B, where the model B represents a discovery mode that the second terminal is to send the first request response message based on the first request message; and
(u22) the second terminal is authorized to use the discovery service related to the first service by using a model A, where the model A represents that the second terminal determines a discovery mode of both the first terminal and the second terminal based on the first request message;
   or
(u3) a first authorization list of the second terminal, where the first authorization list of the second terminal is used to indicate a PLMN list to be discovered when the second terminal is served by the radio access network;
   optionally, the first authorization list of the second terminal may be a PLMN list authorized to use the first service when the service is provided by the RAN; and the PLMN list authorized to use the first service includes at least one of the following (u31) to (u34):
(u31) a PLMN list that the second terminal is authorized to discover using model A announcing, where the PLMN list includes at least one PLMN ID;
(u32) a PLMN list that the second terminal is authorized to discover using model A monitoring, where the PLMN list includes at least one PLMN ID;
(u33) a PLMN list that the second terminal is authorized to discover using model B discoverer operation, where the PLMN list includes at least one PLMN ID; and
(u34) a PLMN list that the second terminal is authorized to discover using model B discoverer operation, where the PLMN list includes at least one PLMN ID;
   or
(u4) second authorization information of the second terminal, where the second authorization information of the second terminal is used to indicate a discovery method type authorized when the second terminal is not served by the radio access network;
   optionally, the second authorization information of the second terminal may be whether to be authorized to use the discovery service related to the first service when the second terminal is not served by the radio access network; where whether to be authorized to use the discovery service related to the first service may, for example, include any one of the following (u41) and (u42):
(u41) being authorized to use the discovery service related to the first service by using a model A; and
(u42) being authorized to use the discovery service related to the first service by using a model B;
   or
(u5) second service information, where the second service information is used to indicate information about a service requested by the second terminal;
   or
(u6) a terminal identifier of the second terminal, where the terminal identifier of the second terminal includes at least one of the following: an identity identifier of the second terminal, a device identifier of the second terminal, and a logical identifier of the second terminal; for example, any one or more of a SUCI of the second terminal, a GUTI of the second terminal, an IMSI of the second terminal, a PEI of the second terminal, an IMEI of the second terminal, a SUPI of the second terminal, a TMSI of the second terminal, a GPSI of the second terminal, and a 5G-S-TMSI of the second terminal;
   or
(u7) security information of the second terminal, where the security information of the second terminal indicates a security parameter related to the first service;
   for example, an encryption key of the second terminal and/or a security parameter of the first terminal;
   or
(u8) algorithm information of the second terminal, where the algorithm information of the second terminal is used for indicating an algorithm required during use of the first service;
   optionally, the algorithm information of the second terminal is algorithm information used by the second terminal for execution of the first service, and the algorithm information includes at least one of the following: an algorithm name, an algorithm identifier, an algorithm parameter, an algorithm precision, and the like;
   or
(u9) reference signal information of the second terminal, where the reference signal information is used for indicating a reference signal required during use of the first service;
   optionally, the reference signal information of the second terminal may indicate information about a reference signal used by the second terminal during use of the ranging and positioning service, including at least one of the following: a name of the reference signal, an identifier of the reference signal, a frequency of the reference signal, a period of the reference signal, a power of the reference signal, and accuracy of the reference signal;
   or
(u10) measurement requirement information of the second terminal; where
   optionally, the measurement requirement information of the second terminal includes measurement accuracy and/or QoS information;
   or
(u11) third authorization indication information, where the third authorization indication information is used to authorize the second terminal to send a reference signal;
   or
(u12) fourth authorization indication information, where the fourth authorization indication information is used to authorize the second terminal to determine a reference signal result.

Optionally, the method further includes:
determining, by the second terminal, a reference signal transmission mode based on the third authorization indication information.

Optionally, the reference signal transmission mode that can be determined by the second terminal based on the third authorization indication information is any one or more of the following:
the first terminal sends a reference signal;
the second terminal sends a reference signal;
the first terminal and the second terminal send a reference signal;
immediately sending a reference signal;
periodically sending a reference signal; or
an event triggers sending of a reference signal.

Optionally, the method further includes:
determining, by the second terminal, a result determining manner based on the fourth authorization indication information.

Optionally, the result determining manner determined by the second terminal based on the fourth authorization indication information includes at least one of the following:
the first terminal determines a first result;
the second terminal determines the first result; or
the first terminal and the second terminal determine the first result.

In some embodiments, the reference signal transmission mode is associated with the result determining manner. For example, if the first terminal sets, in the first request message, the reference signal transmission mode to "the first terminal sends a reference signal", after the second terminal receives the first request message, the second terminal can infer that the "result determining manner" of the first service is "the second terminal determines the first result".

Optionally, the method further includes:
performing, by the second terminal, a second operation based on the first request message, where the second operation includes at least one of the following:
based on the second service information in the second configuration information and the first service information in the first request message, the second terminal determines that the second terminal provides the first service;
based on the reference signal information of the second terminal in the second configuration information and the reference signal information of the first terminal in the first request message, the second terminal determines that the second terminal provides the first service;
based on the algorithm information of the second terminal in the second configuration information and the algorithm information of the first terminal in the first request message, the second terminal determines that the second terminal provides the first service;
based on the measurement requirement information of the second terminal in the second configuration information and the measurement requirement information of the first terminal in the first request message, the second terminal determines that the second terminal provides the first service;
based on the third authorization indication information in the second configuration information and the reference signal transmission mode in the first request message, the second terminal determines that the second terminal provides the first service; and
based on the fourth authorization indication information in the second configuration information and the result determining manner in the first request message, the second terminal determines that the second terminal provides the first service.

Optionally, the second terminal can determine, based on the first request message, whether the first terminal and the second terminal can perform the first service. In this case, after receiving the first request message, the second terminal can determine, based on the first request message, to perform the first service with the first terminal, and then directly initiate a process of executing the first service.

Optionally, when determining the first result, the second terminal may perform a second operation based on the first request message. The second operation includes at least one of the following:
based on the second service information in the second configuration information and the first service information in the first request message, the second terminal determines that the second terminal provides the first service;
based on the reference signal information of the second terminal in the second configuration information and the reference signal information of the first terminal in the first request message, the second terminal determines that the second terminal provides the first service;
based on the algorithm information of the second terminal in the second configuration information and the algorithm information of the first terminal in the first request message, the second terminal determines that the second terminal provides the first service;
based on the measurement requirement information of the second terminal in the second configuration information and the measurement requirement information of the first terminal in the first request message, the second terminal determines that the second terminal provides the first service;
based on the third authorization indication information in the second configuration information and the reference signal transmission mode in the first request message, the second terminal determines that the second terminal provides the first service; and
based on the fourth authorization indication information in the second configuration information and the result determining manner in the first request message, the second terminal determines that the second terminal provides the first service.

That the second terminal determines, based on the second service information in the second configuration information and the first service information in the first request message, that the first terminal and the second terminal can perform the first service may be: in a case that the second terminal determines the second service information in the second configuration information matching the first service information in the first request message, determining that the first terminal and the second terminal can perform the first service.

That the second terminal determines, based on the reference signal information of the second terminal in the second configuration information and the reference signal information of the first terminal in the first request message, that the first terminal and the second terminal can perform the first service may be: in a case that the second terminal determines the reference signal information of the second terminal in the second configuration information matching the reference signal information of the first terminal in the first request message, determining that the first terminal and the second terminal can perform the first service.

That the second terminal determines, based on the algorithm information of the second terminal in the second configuration information and the algorithm information of the first terminal in the first request message, that the first terminal and the second terminal can perform the first service may be: in a case that the second terminal determines the algorithm information of the second terminal in the second configuration information matching the algorithm information of the first terminal in the first request message, determining that the first terminal and the second terminal can perform the first service.

That the second terminal determines, based on the measurement requirement information of the second terminal in the second configuration information and the measurement requirement information of the first terminal in the first request message, that the first terminal and the second terminal can perform the first service may be: in a case that the second terminal determines the measurement requirement information of the second terminal in the second configuration information matching the measurement requirement information of the first terminal in the first request message, determining that the first terminal and the second terminal can perform the first service.

That the second terminal determines, based on the third authorization indication information in the second configuration information and the reference signal transmission mode in the first request message, that the first terminal and the second terminal can perform the first service may be: in a case that the second terminal determines the third authorization indication information in the second configuration information matching the reference signal transmission mode in the first request message, determining that the first terminal and the second terminal can perform the first service.

That the second terminal determines, based on the fourth authorization indication information in the second configuration information and the result determining manner in the first request message, that the first terminal and the second terminal can perform the first service may be: in a case that the second terminal determines the fourth authorization indication information in the second configuration information matching the result determining manner in the first request message, determining that the first terminal and the second terminal can perform the first service.

Optionally, matching may be the same or similar, and similarity may be that corresponding values belong to a same range or indicated content has the same substantive meaning.

Optionally, the method further includes:
sending, by the second terminal, a first request response message to the first terminal, where the first request response message is used to indicate that the second terminal has received the first request message of the first terminal.

Optionally, whether the second terminal supports the first service can be determined by the first terminal. In this case, based on the first request response message sent by the second terminal, the first terminal may determine whether the second terminal supports the first service. In this case, after receiving the first request message, the second terminal merely needs to determine that a message type of the first request message is a first service discovery request message, and then directly send the first request message response.

Optionally, whether the second terminal supports the first service may be determined by the first terminal, and the second terminal may determine, based on the first request message, that the first terminal may perform the first service with the second terminal. In this case, after receiving the first request message, the second terminal may determine, based on the first request message, that the first terminal is able to perform the first service with the second terminal, and then sends a first request message response. After receiving the first request message response, the first terminal may determine, based on the first request message response, that the second terminal also supports the first service.

The second terminal determining that both the first terminal and the second terminal support the first service may be based on at least one of the following: a first request message, an application layer indication, a network side indication, or pre-configuration information.

Optionally, the sending, by the second terminal, a first request response message to the first terminal includes:
sending, by the second terminal, second assistance information based on the third indication information; where the second assistance information is in the first request response message.

Optionally, in a case that the first request message includes the third indication information, the second terminal may send the second assistance information based on the third indication information.

Optionally, the second assistance information may be one of the first request response message.

Optionally, the first request response message includes at least one of the following:
second indication information, used for indicating that the first request response message is used for the first service;
second message type, used for indicating a message type of the first request response message;
second service information, where the second service information is used to indicate information about a service provided by the second terminal;
a terminal identifier of the first terminal;
a terminal identifier of the second terminal;
second assistance information, where the second assistance information of the second terminal is used to assist the first terminal in discovering the second terminal that supports the first service;
a reference signal transmission mode; or
a result determining manner.

Optionally, the first request response message may include any one or more of the following (j) to (q):
(j) second indication information, where the second indication information is used to indicate that the first request response message is used for the first service;
   or
(k) second message type, where the second message type is used for indicating a message type of the first request response message;
   in an implementation, message types of different messages may include: a first service discovery request message and a first service discovery request response message; and
   in an implementation, the second message type is used to directly indicate a message type of a carrying message being the first service discovery request response message;
   or
(l) second service information, where the second service information is used to indicate information about a service provided by the second terminal;
   or
(m) a terminal identifier of the first terminal, where the terminal identifier of the first terminal includes at least one of the following: an identity identifier of the first terminal, a device identifier of the first terminal, and a logical identifier of the first terminal;
   or
(n) a terminal identifier of the second terminal, where the terminal identifier of the second terminal includes at least one of the following: an identity identifier of the second terminal, a device identifier of the second terminal, and a logical identifier of the second terminal;
   or
(o) second assistance information, where the second assistance information is used to assist the first terminal in discovering the second terminal that supports the first service;
   or
(p) a reference signal transmission mode;
   or
(q) a result determining manner.

Optionally, the first request response message further includes the address information of the first terminal and/or the address information of the second terminal; or
the address information of the first terminal and/or the address information of the second terminal are sent along with the first request response message.

Optionally, the second terminal may send the address information of the first terminal to the first terminal.

Optionally, the second terminal may send the address information of the second terminal to the first terminal.

Optionally, the second terminal may send the address information of the first terminal and the address information of the second terminal to the first terminal.

Optionally, the address information of the first terminal may be included in the first request response message, or may be sent along with the first request response message but not being included in the first request response message.

Optionally, the address information of the second terminal may be included in the first request response message, or may be sent along with the first request response message but not being included in the first request response message.

Optionally, the address information of the first terminal and the address information of the second terminal may be included in the first request response message, or may be sent along with the first request response message but not being included in the first request response message.

Optionally, the second service information includes at least one of the following: a service code corresponding to the second terminal, a service identifier corresponding to the second terminal, or a service type corresponding to the second terminal.

Optionally, the second service information may include at least one of the following:
a service code corresponding to the second terminal, where the service code corresponding to the second terminal is used for at least one of the following: identifying that the second terminal needs to use the first service, identifying that the second terminal is authorized to use the first service, or verifying that other terminals are authorized to use the first service;
a service identifier corresponding to the second terminal, where the service identifier indicates that use of the first service is authorized for the identified service; and
a service type corresponding to the second terminal.

In an implementation, the first request response message includes the second service information, and can be also understood that the second terminal can provide the first service related to the second service information. For example, when the second service information is a service identifier, it can be understood that the second terminal can provide the first service related to a service identified by the service identifier.

Optionally, the second assistance information includes at least one of the following: reference signal information of the second terminal, algorithm information of the second terminal, or measurement requirement information of the second terminal.

Optionally, the second assistance information may include reference signal information of the second terminal.

Optionally, the second assistance information may include algorithm information of the second terminal.

Optionally, the second assistance information may include measurement requirement information of the second terminal.

Optionally, the second assistance information may include reference signal information of the second terminal and algorithm information of the second terminal.

Optionally, the second assistance information may include reference signal information of the second terminal and measurement requirement information of the second terminal.

Optionally, the second assistance information may include algorithm information of the second terminal and measurement requirement information of the second terminal.

Optionally, regardless of whether the second assistance information includes one or more items, when the first terminal or the second terminal implements discovery of a terminal supporting the first service based on the second assistance information, all or part of the items included in the second assistance information can be used.

Optionally, the algorithm information of the second terminal is algorithm information used by the second terminal for execution of the first service, and the algorithm information includes at least one of the following: an algorithm name, an algorithm identifier, an algorithm parameter, an algorithm precision, and the like.

Optionally, the reference signal information of the second terminal may indicate information about a reference signal used by the second terminal during use of the ranging and positioning service, including at least one of the following: a name of the reference signal, an identifier of the reference signal, a frequency of the reference signal, a period of the reference signal, a power of the reference signal, and accuracy of the reference signal.

Optionally, the measurement requirement information of the second terminal includes measurement accuracy and/or QoS information.

Optionally, the reference signal transmission mode includes at least one of the following:
the first terminal sends a reference signal;
the second terminal sends a reference signal;
the first terminal and the second terminal send a reference signal;
immediately sending a reference signal;
periodically sending a reference signal; or
an event triggers sending of a reference signal.

Optionally, the reference signal transmission mode includes any one or more of the following:
the first terminal sends a reference signal; or
the second terminal sends a reference signal; or
the first terminal and the second terminal send a reference signal; or
immediately sending a reference signal; or
periodically sending a reference signal; or
an event triggers sending of a reference signal.

Optionally, the result determining manner includes at least one of the following:
the first terminal determines a first result, the second terminal determines the first result, and the first terminal and the second terminal determine the first result.

Optionally, the result determining manner includes any one or more of the following:
the first terminal determines a first result; or
the second terminal determines the first result; or
the first terminal and the second terminal determine the first result.

In some embodiments, the reference signal transmission mode is associated with the result determining manner. For example, if the first terminal sets, in the first request message, the reference signal transmission mode to "the first terminal sends a reference signal", after the second terminal receives the first request message, the second terminal can infer that the "result determining manner" of the first service is "the second terminal determines the first result".

Optionally, the first result may be a result obtained by executing the first service, such as a distance between two or more UEs and/or a direction and/or relative positioning between one UE (that is, target UE) and another UE (that is, reference UE). Optionally, the first result may be a result corresponding to the first service related to the second terminal and obtained by the first terminal, and the first result may include at least one of the following:
absolute location information of the second terminal, relative location information of the second terminal with respect to the first terminal, accuracy information, or a measurement result of a second positioning reference signal.

Specifically, the absolute location information of the second terminal is, for example, TA, registration area RA, cell ID, latitude and longitude, altitude, horizontal direction angle, and elevation direction angle.

The relative location information is, for example, a relative angle or a relative distance of the second terminal relative to the first terminal.

The accuracy information indicates accuracy information of the first result, which, for example, may include at least one of the following: result dimension information, measurement accuracy, and error information. The result dimension information is, for example, angle, meter, or centimeter. The measurement accuracy is, for example, high accuracy, ultra-high accuracy, and low accuracy. The error information includes: error accuracy information and error dimension information. The error information is, for example, high error, low error, and ultra-low error. The error dimension information is, for example, angle, meter, or centimeter.

The measurement result indicates a measurement result of the second positioning reference signal, for example, a signal strength, or a value of a specific measurement quantity obtained through calculation based on the second positioning reference signal.

Optionally, the sending, by the second terminal, a first request response message to the first terminal includes:
sending, by the second terminal, the first request response message to the first terminal based on first information, where the first information includes at least one of the following:
a first request message, application layer indication information, network side indication information, or pre-configuration information.

Optionally, after receiving the first request message, the second terminal may determine, based on the first request message, that the first terminal supports the first service and determines that the second terminal also supports the first service, and then sends a first request message response. After receiving the first request message response, the first terminal may determine, based on the first request message response, that the second terminal also supports the first service.

The second terminal determining that both the first terminal and the second terminal support the first service may be based on at least one of the following: a first request message, application layer indication information, network side indication information, or pre-configuration information.

Optionally, in a case that the first information includes the application layer indication information, the sending, by the second terminal, the first request response message to the first terminal based on first information includes at least one of the following:
sending, by the second terminal, the first request response message to the first terminal based on the reference signal transmission mode in the first request message and a reference signal transmission mode included in the application layer indication information;
sending, by the second terminal, the first request response message to the first terminal based on the result determining manner in the first request message and a result determining manner included in the application layer indication information;
sending, by the second terminal, the first request response message to the first terminal based on the first service information in the first request message and service information included in the application layer indication information; or
sending, by the second terminal, the first request response message to the first terminal based on the terminal identifier of the first terminal in the first request message and a terminal identifier included in the application layer indication information.

Optionally, the application layer indication information may include at least one of the following:
a reference signal transmission mode;
a result determining manner;
service information; or
a terminal identifier.

Optionally, that the second terminal sends the first request response message to the first terminal based on the reference signal transmission mode in the first request message and the reference signal transmission mode included in the application layer indication information may be: sending the first request response message to the first terminal in a case that the second terminal determines the reference signal transmission mode in the first request message matching the reference signal transmission mode included in the application layer indication information.

Optionally, that the second terminal sends the first request response message to the first terminal based on the result determining manner in the first request message and the result determining manner included in the application layer indication information may be: sending the first request response message to the first terminal in a case that the second terminal determines the result determining manner in the first request message matching the result determining manner included in the application layer indication information.

Optionally, that the second terminal sends the first request response message to the first terminal based on the first service information in the first request message and the service information included in the application layer indication information may be: sending the first request response message to the first terminal in a case that the second terminal determines the first service information in the first request message matching the service information included in the application layer indication information.

Optionally, that the second terminal sends the first request response message to the first terminal based on the first terminal identifier in the first request message and the terminal identifier included in the application layer indication information may be: sending the first request response message to the first terminal in a case that the second terminal determines the first terminal identifier in the first request message matching the terminal identifier included in the application layer indication information.

Optionally, matching may be the same or similar, and similarity may be that corresponding values belong to a same range or indicated content has the same substantive meaning.

Optionally, in a case that the first information includes the pre-configuration information, the sending, by the second terminal, the first request response message to the first terminal based on first information includes at least one of the following:
sending, by the second terminal, the first request response message to the first terminal based on the reference signal transmission mode in the first request message and a reference signal transmission mode included in the pre-configuration information;
sending, by the second terminal, the first request response message to the first terminal based on the result determining manner in the first request message and a result determining manner included in the pre-configuration information;
sending, by the second terminal, the first request response message to the first terminal based on the terminal identifier of the first terminal in the first request message and a terminal identifier of the first terminal included in the pre-configuration information;
sending, by the second terminal, the first request response message to the first terminal based on the first service information in the first request message and service information included in the pre-configuration information;
sending, by the second terminal, the first request response message to the first terminal based on the address information of the second terminal in the first request message and address information of the second terminal included in the pre-configuration information; or
sending, by the second terminal, the first request response message to the first terminal based on the terminal identifier of the second terminal in the first request message and a terminal identifier of the second terminal included in the pre-configuration information.

The second terminal sends the first request response message to the first terminal based on the reference signal transmission mode in the first request message and the reference signal transmission mode included in the pre-configuration information.

That the second terminal sends the first request response message to the first terminal based on the result determining manner in the first request message and the result determining manner included in the pre-configuration information may be: sending the first request response message to the first terminal in a case that the second terminal determines the result determining manner in the first request message matching the result determining manner included in the pre-configuration information.

That the second terminal sends the first request response message to the first terminal based on the terminal identifier of the first terminal in the first request message and the terminal identifier of the first terminal included in the pre-configuration information may be: sending the first request response message to the first terminal in a case that the second terminal determines the terminal identifier of the first terminal in the first request message matching the terminal identifier of the first terminal included in the pre-configuration information.

That the second terminal sends the first request response message to the first terminal based on the first service information in the first request message and the service information included in the pre-configuration information may be: sending the first request response message to the first terminal in a case that the second terminal determines the first service information in the first request message matching the service information included in the pre-configuration information.

That the second terminal sends the first request response message to the first terminal based on the address information of the second terminal in the first request message and the address information of the second terminal included in the pre-configuration information may be: sending the first request response message to the first terminal in a case that the second terminal determines the address information of the second terminal in the first request message matching the address information of the second terminal included in the pre-configuration information.

That the second terminal sends the first request response message to the first terminal based on the terminal identifier of the second terminal in the first request message and the terminal identifier of the second terminal included in the pre-configuration information may be: sending the first request response message to the first terminal in a case that the second terminal determines the terminal identifier of the second terminal in the first request message matching the terminal identifier of the second terminal included in the pre-configuration information.

Optionally, the pre-configuration information may include at least one of the following:
a reference signal transmission mode; or
a result determining manner.

In this embodiment of this application, the configuration information related to a ranging-based service and/or sidelink positioning service is obtained to perform the ranging-based service and/or sidelink positioning service. In a case that a terminal supporting the ranging-based service and/or sidelink positioning service needs to be discovered, the first request message is transmitted, so that one terminal supporting the ranging-based service and/or sidelink positioning service can discover another terminal supporting ranging-based service and/or sidelink positioning service to obtain the ranging-based service and/or sidelink positioning service.

FIG. 6 is a fifth schematic flowchart of a terminal discovery method according to an embodiment of this application. As shown in FIG. 6, the method includes the following step.

Step 600: A first network side sends first configuration information to a first terminal, where the first configuration information is used for a first service, and the first service includes a ranging-based service and/or a sidelink positioning service.

Optionally, the first network-side device may configure in advance, for the first terminal, a parameter or policy (which may be referred to as first configuration information) related to the first service.

Optionally, the first network side does not need to send the first configuration information to the first terminal each time the first service is executed. An occasion at which the first network side sends the first configuration information to the first terminal is not limited in the embodiments of this application.

In an implementation, when the first terminal registers to the first network side, the first network side sends the first configuration information to the first terminal.

In another implementation, the first terminal may request at any time to obtain or update the first configuration information.

In another implementation, the first configuration information is configured in the first terminal in a preconfigured manner.

In this embodiment of this application, the configuration information related to a ranging-based service and/or sidelink positioning service is obtained to perform the ranging-based service and/or sidelink positioning service. In a case that a terminal supporting the ranging-based service and/or sidelink positioning service needs to be discovered, the first request message is transmitted, so that one terminal supporting the ranging-based service and/or sidelink positioning service can discover another terminal supporting ranging-based service and/or sidelink positioning service to obtain the ranging-based service and/or sidelink positioning service.

Optionally, the first configuration information includes at least one of the following:
validity time of the first configuration information;
first authorization information of the first terminal, where the first authorization information of the first terminal is used to indicate a discovery method type authorized when the first terminal is served by a radio access network;
a first authorization list of the first terminal, where the first authorization list of the first terminal is used to indicate a PLMN list to be discovered when the first terminal is served by the radio access network;
second authorization information of the first terminal, where the second authorization information of the first terminal is used to indicate a discovery method type authorized when the first terminal is not served by the radio access network;
first service information, where the first service information is used to indicate information about a service requested by the first terminal;
a terminal identifier of the first terminal, where the terminal identifier includes at least one of the following: an identity identifier, a device identifier, and a logical identifier;
security information of the first terminal, where the security information indicates a security parameter related to the first service;
algorithm information of the first terminal, where the algorithm information is used for indicating an algorithm required during use of the first service; or
reference signal information of the first terminal, where the reference signal information is used for indicating a reference signal required during use of the first service;
measurement requirement information of the first terminal;
first authorization indication information, where the first authorization indication information is used to authorize the first terminal to send a reference signal; or
second authorization indication information, where the second authorization indication information is used to authorize the first terminal to determine a reference signal result.

The first configuration information may include any one or more of the following (t1) to (t12):
(t1) validity time of the first configuration information; where
   optionally, the validity time indicates a validity time of the first configuration information; and
   optionally, after the validity time expires, the first configuration information becomes invalid;
   or
(t2) first authorization information of the first terminal, where the first authorization information of the first terminal is used to indicate a discovery method type authorized when the first terminal is served by a radio access network;
   optionally, the first authorization information of the first terminal may be whether the first terminal is authorized to use the discovery service related to the first service when being served by the radio access network RAN (served by RAN); where whether to be authorized to use the discovery service related to the first service may, for example, include any one of the following (t21) and (t22):
(t21) the first terminal is authorized to use the discovery service related to the first service by using a model B, where the model B represents a discovery mode that the second terminal is to send the first request response message based on the first request message; and
(t22) the first terminal is authorized to use the discovery service related to the first service by using a model A, where the model A represents that the second terminal determines a discovery mode of both the first terminal and the second terminal based on the first request message;
   or
(t3) a first authorization list of the first terminal, where the first authorization list of the first terminal is used to indicate a PLMN list to be discovered when the first terminal is served by the radio access network;
   optionally, the first authorization list may be a PLMN list authorized to use the first service when the service is provided by the RAN; and the PLMN list authorized to use the first service includes at least one of the following (t31) to (t34):
(t31) a PLMN list that the first terminal is authorized to discover using model A announcing, where the PLMN list includes at least one PLMN ID;
(t32) a PLMN list that the first terminal is authorized to discover using model A monitoring, where the PLMN list includes at least one PLMN ID;
(t33) a PLMN list that the first terminal is authorized to discover using model B discoverer operation, where the PLMN list includes at least one PLMN ID; and
(t34) a PLMN list that the first terminal is authorized to discover using model B discoverer operation, where the PLMN list includes at least one PLMN ID;
   or
(t4) second authorization information of the first terminal, where the second authorization information of the first terminal is used to indicate a discovery method type authorized when the first terminal is not served by the radio access network;
   optionally, the second authorization information of the first terminal may be whether to be authorized to use the discovery service related to the first service when the first terminal is not served by the radio access network; where whether to be authorized to use the discovery service related to the first service may, for example, include any one of the following (t41) and (t42):
(t41) being authorized to use the discovery service related to the first service by using a model A; and
(t42) being authorized to use the discovery service related to the first service by using a model B;
   or
(t5) first service information, where the first service information is used to indicate information about a service requested by the first terminal;
   or
(t6) a terminal identifier of the first terminal, where the terminal identifier of the first terminal includes at least one of the following: an identity identifier of the first terminal, a device identifier of the first terminal, and a logical identifier of the first terminal; for example, any one or more of a SUCI of the first terminal, a GUTI of the first terminal, an IMSI of the first terminal, a PEI of the first terminal, an IMEI of the first terminal, a SUPI of the first terminal, a TMSI of the first terminal, a GPSI of the first terminal, and a 5G-S-TMSI of the first terminal;
   or
(t7) security information of the first terminal, where the security information indicates a security parameter related to the first service;
   for example, an encryption key of the first terminal and/or a security parameter of the first terminal;
   or
(t8) algorithm information of the first terminal, where the algorithm information is used for indicating an algorithm required during use of the first service;
   optionally, the algorithm information of the first terminal is algorithm information used by the first terminal for execution of the first service, and the algorithm information includes at least one of the following: an algorithm name, an algorithm identifier, an algorithm parameter, an algorithm precision, and the like; and it should be noted that the algorithm information may sometimes be called method information;
   or
(t9) reference signal information of the first terminal, where the reference signal information is used for indicating a reference signal required during use of the first service;
   optionally, the reference signal information of the first terminal may indicate information about a reference signal used by the first terminal during use of the ranging and positioning service, including at least one of the following: a name of the reference signal, an identifier of the reference signal, a frequency of the reference signal, a period of the reference signal, a power of the reference signal, and accuracy of the reference signal;
   or
(t10) measurement requirement information of the first terminal; where
   optionally, the measurement requirement information of the first terminal includes measurement accuracy and/or QoS information;
   or
(t11) first authorization indication information, where the first authorization indication information is used to authorize the first terminal to send a reference signal;
   or
(t12) second authorization indication information, where the second authorization indication information is used to authorize the first terminal to determine a reference signal result.

Optionally, the first service information includes at least one of the following: a service code corresponding to the first terminal, a service identifier corresponding to the first terminal, or a service type corresponding to the first terminal.

Optionally, the first service information may include at least one of the following:
a service code corresponding to the first terminal, where the service code corresponding to the first terminal is used for at least one of the following: identifying that the first terminal needs to use the first service, identifying that the first terminal is authorized to use the first service, or verifying that other terminals are authorized to use the first service;
a service identifier corresponding to the first terminal, where the service identifier indicates that use of the first service is authorized for the identified service; and
a service type corresponding to the first terminal.

In this embodiment of this application, the configuration information related to a ranging-based service and/or sidelink positioning service is obtained to perform the ranging-based service and/or sidelink positioning service. In a case that a terminal supporting the ranging-based service and/or sidelink positioning service needs to be discovered, the first request message is transmitted, so that one terminal supporting the ranging-based service and/or sidelink positioning service can discover another terminal supporting ranging-based service and/or sidelink positioning service to obtain the ranging-based service and/or sidelink positioning service.

FIG. 7 is a sixth schematic flowchart of a terminal discovery method according to an embodiment of this application. As shown in FIG. 7, the method includes the following step.

Step 700: A second network side sends second configuration information to a second terminal; where the second configuration information is used for a first service, and the first service includes a ranging-based service and/or a sidelink positioning service.

Optionally, the second network-side device may configure in advance, for the second terminal, a parameter or policy (which may be referred to as second configuration information) related to the first service.

Optionally, the second network side does not need to send the second configuration information to the second terminal each time the first service is executed. An occasion at which the second network side sends the second configuration information to the second terminal is not limited in this embodiment.

In an implementation, when the second terminal registers to the second network side, the second network side sends the second configuration information to the second terminal.

In another implementation, the second terminal may request at any time to obtain or update the second configuration information.

In another implementation, the second configuration information is configured in the second terminal in a preconfigured manner.

In this embodiment of this application, the configuration information related to a ranging-based service and/or sidelink positioning service is obtained to perform the ranging-based service and/or sidelink positioning service. In a case that a terminal supporting the ranging-based service and/or sidelink positioning service needs to be discovered, the first request message is transmitted, so that one terminal supporting the ranging-based service and/or sidelink positioning service can discover another terminal supporting ranging-based service and/or sidelink positioning service to obtain the ranging-based service and/or sidelink positioning service.

Optionally, the second configuration information includes at least one of the following:
validity time of the second configuration information;
first authorization information of the second terminal, where the first authorization information of the second terminal is used to indicate a discovery method type authorized when the second terminal is served by a radio access network;
a first authorization list of the second terminal, where the first authorization list of the second terminal is used to indicate a PLMN list to be discovered when the second terminal is served by the radio access network;
second authorization information of the second terminal, where the second authorization information of the second terminal is used to indicate a discovery method type authorized when the second terminal is not served by the radio access network;
second service information, where the second service information is used to indicate information about a service requested by the second terminal;
a terminal identifier of the second terminal, where the terminal identifier includes at least one of the following: an identity identifier, a device identifier, and a logical identifier;
security information of the second terminal, where the security information indicates a security parameter related to the first service;
algorithm information of the second terminal, where the algorithm information is used for indicating an algorithm required during use of the first service;
reference signal information of the second terminal, where the reference signal information is used for indicating a reference signal required during use of the first service;
measurement requirement information of the second terminal;
third authorization indication information, where the third authorization indication information is used to authorize the second terminal to send a reference signal; or
fourth authorization indication information, where the fourth authorization indication information is used to authorize the second terminal to determine a reference signal result.

Optionally, the second configuration information may include any one or more of the following (u1) to (u12):
(u1) validity time of the second configuration information; where
   optionally, the validity time indicates a validity time of the second configuration information; and
   optionally, after the validity time expires, the second configuration information becomes invalid;
   or
(u2) first authorization information of the second terminal, where the first authorization information of the second terminal is used to indicate a discovery method type authorized when the second terminal is served by a radio access network;
   optionally, the first authorization information of the second terminal may be whether the second terminal is authorized to use the discovery service related to the first service when being served by the radio access network RAN (served by RAN); where whether to be authorized to use the discovery service related to the first service may, for example, include any one of the following (u21) and (u22):
(u21) the second terminal is authorized to use the discovery service related to the first service by using a model B, where the model B represents a discovery mode that the second terminal is to send the first request response message based on the first request message; and
(u22) the second terminal is authorized to use the discovery service related to the first service by using a model A, where the model A represents that the second terminal determines a discovery mode of both the first terminal and the second terminal based on the first request message;
   or
(u3) a first authorization list of the second terminal, where the first authorization list of the second terminal is used to indicate a PLMN list to be discovered when the second terminal is served by the radio access network;
   optionally, the first authorization list of the second terminal may be a PLMN list authorized to use the first service when the service is provided by the RAN; and the PLMN list authorized to use the first service includes at least one of the following (u31) to (u34):
(u31) a PLMN list that the second terminal is authorized to discover using model A announcing, where the PLMN list includes at least one PLMN ID;
(u32) a PLMN list that the second terminal is authorized to discover using model A monitoring, where the PLMN list includes at least one PLMN ID;
(u33) a PLMN list that the second terminal is authorized to discover using model B discoverer operation, where the PLMN list includes at least one PLMN ID; and
(u34) a PLMN list that the second terminal is authorized to discover using model B discoverer operation, where the PLMN list includes at least one PLMN ID;
   or
(u4) second authorization information of the second terminal, where the second authorization information of the second terminal is used to indicate a discovery method type authorized when the second terminal is not served by the radio access network;
   optionally, the second authorization information of the second terminal may be whether to be authorized to use the discovery service related to the first service when the second terminal is not served by the radio access network; where whether to be authorized to use the discovery service related to the first service may, for example, include any one of the following (u41) and (u42):
(u41) the second terminal is authorized to use the discovery service related to the first service by using a model A; and
(u42) the second terminal is authorized to use the discovery service related to the first service by using a model B;
   or
(u5) second service information, where the second service information is used to indicate information about a service requested by the second terminal;
   or
(u6) a terminal identifier of the second terminal, where the terminal identifier of the second terminal includes at least one of the following: an identity identifier of the second terminal, a device identifier of the second terminal, and a logical identifier of the second terminal; for example, any one or more of a SUCI of the second terminal, a GUTI of the second terminal, an IMSI of the second terminal, a PEI of the second terminal, an IMEI of the second terminal, a SUPI of the second terminal, a TMSI of the second terminal, a GPSI of the second terminal, and a 5G-S-TMSI of the second terminal;
   or
(u7) security information of the second terminal, where the security information of the second terminal indicates a security parameter related to the first service;
   for example, an encryption key of the second terminal and/or a security parameter of the first terminal;
   or
(u8) algorithm information of the second terminal, where the algorithm information of the second terminal is used for indicating an algorithm required during use of the first service;
   optionally, the algorithm information of the second terminal is algorithm information used by the second terminal for execution of the first service, and the algorithm information includes at least one of the following: an algorithm name, an algorithm identifier, an algorithm parameter, an algorithm precision, and the like; and it should be noted that the algorithm information may sometimes be called method information;
   or
(u9) reference signal information of the second terminal, where the reference signal information is used for indicating a reference signal required during use of the first service;
   optionally, the reference signal information of the second terminal may indicate information about a reference signal used by the second terminal during use of the ranging and positioning service, including at least one of the following: a name of the reference signal, an identifier of the reference signal, a frequency of the reference signal, a period of the reference signal, a power of the reference signal, and accuracy of the reference signal;
   or
(u10) measurement requirement information of the second terminal; where
   optionally, the measurement requirement information of the second terminal includes measurement accuracy and/or QoS information;
   or
(u11) third authorization indication information, where the third authorization indication information is used to authorize the second terminal to send a reference signal;
   or
(u12) fourth authorization indication information, where the fourth authorization indication information is used to authorize the second terminal to determine a reference signal result.

Optionally, the second service information includes at least one of the following: a service code corresponding to the second terminal, a service identifier corresponding to the second terminal, or a service type corresponding to the second terminal.

Optionally, the second service information may include at least one of the following:
a service code corresponding to the second terminal, where the service code corresponding to the second terminal is used for at least one of the following: identifying that the second terminal needs to use the first service, identifying that the second terminal is authorized to use the first service, or verifying that other terminals are authorized to use the first service;
a service identifier corresponding to the second terminal, where the service identifier indicates that use of the first service is authorized for the identified service; and
a service type corresponding to the second terminal.

In an implementation, the first request response message includes the second service information, and can be also understood that the second terminal can provide the first service related to the second service information. For example, when the second service information is a service identifier, it can be understood that the second terminal can provide the first service related to a service identified by the service identifier.

In this embodiment of this application, the configuration information related to a ranging-based service and/or sidelink positioning service is obtained to perform the ranging-based service and/or sidelink positioning service. In a case that a terminal supporting the ranging-based service and/or sidelink positioning service needs to be discovered, the first request message is transmitted, so that one terminal supporting the ranging-based service and/or sidelink positioning service can discover another terminal supporting ranging-based service and/or sidelink positioning service to obtain the ranging-based service and/or sidelink positioning service.

In the terminal discovery method provided in the embodiments of this application, the execution subject may be a terminal discovery apparatus. In this embodiment of this application, the terminal discovery apparatus provided in the embodiments of this application is described by using the terminal discovery method being executed by the terminal discovery apparatus as an example.

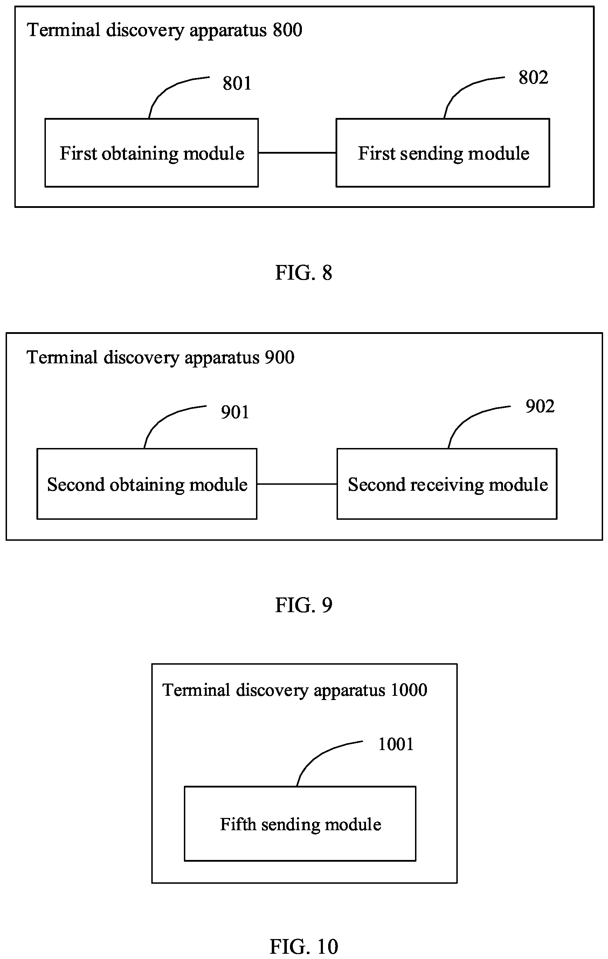

FIG. 8 is a first schematic structural diagram of a terminal discovery apparatus according to an embodiment of this application. As shown in FIG. 8, the apparatus 800 includes a first obtaining module 801 and a first sending module 802.

The first obtaining module 801 is configured to obtain first configuration information related to a first service.

The first sending module 802 is configured to send a first request message to a second terminal.

The first request message is used to request discovery of the second terminal supporting the first service, and the first service includes a ranging-based service and/or a sidelink positioning service.

In this embodiment of this application, the configuration information related to a ranging-based service and/or sidelink positioning service is obtained to perform the ranging-based service and/or sidelink positioning service. In a case that a terminal supporting the ranging-based service and/or sidelink positioning service needs to be discovered, the first request message is transmitted, so that one terminal supporting the ranging-based service and/or sidelink positioning service can discover another terminal supporting ranging-based service and/or sidelink positioning service to obtain the ranging-based service and/or sidelink positioning service.

Optionally, the first request message includes at least one of the following:
first indication information, where the first indication information is used to indicate that the first request message is used for the first service;
third indication information, where the third indication information is used to indicate the second terminal to send second assistance information, and the second assistance information is used to assist the first terminal in discovering the second terminal that supports the first service;
a first message type, where the first message type is used for indicating a message type of the first request message;
a terminal identifier of the first terminal, where the terminal identifier includes at least one of the following: an identity identifier, a device identifier, and a logical identifier;
a terminal identifier of the second terminal;
first service information, where the first service information is used to indicate information about a service requested by the first terminal;
first assistance information, where the first assistance information is used to assist the first terminal in discovering the second terminal that supports the first service;
a reference signal transmission mode; or
a result determining manner.

Optionally, the first assistance information includes at least one of the following: reference signal information of the first terminal, algorithm information of the first terminal, or measurement requirement information of the first terminal.

Optionally, the first service information includes at least one of the following: a service code corresponding to the first terminal, a service identifier corresponding to the first terminal, or a service type corresponding to the first terminal.

Optionally, the first request message further includes address information of the first terminal and/or address information of the second terminal; or
the address information of the first terminal and/or the address information of the second terminal are sent along with the first request message.

Optionally, the apparatus further includes a first receiving module, and the first receiving module is configured to:
after the first request message is sent to the second terminal, receive a first request response message sent by the second terminal, where the first request response message is used to indicate that the second terminal has received the first request message of the first terminal.

Optionally, the first request response message includes at least one of the following:
second indication information, used for indicating that the first request response message is used for the first service;
second message type, used for indicating a message type of the first request response message;
second service information, where the second service information is used to indicate information about a service provided by the second terminal;
a terminal identifier of the first terminal;
a terminal identifier of the second terminal;
second assistance information, where the second assistance information is used to assist the first terminal in discovering the second terminal that supports the first service;
a reference signal transmission mode; or
a result determining manner.

Optionally, the second service information includes at least one of the following: a service code corresponding to the second terminal, a service identifier corresponding to the second terminal, or a service type corresponding to the second terminal.

Optionally, the first request response message further includes address information of the first terminal and/or address information of the second terminal; or
the address information of the first terminal and/or the address information of the second terminal are sent along with the first request response message.

Optionally, the second assistance information includes at least one of the following: reference signal information of the second terminal, algorithm information of the second terminal, or measurement requirement information of the second terminal.

Optionally, the reference signal transmission mode includes at least one of the following:
the first terminal sends a reference signal;
the second terminal sends a reference signal;
the first terminal and the second terminal send a reference signal;
immediately sending a reference signal;
periodically sending a reference signal; or
an event triggers sending of a reference signal.

Optionally, the result determining manner includes at least one of the following:
the first terminal determines a first result;
the second terminal determines the first result; or
the first terminal and the second terminal determine the first result.

Optionally, the apparatus further includes a first determining module, and the first determining module is configured to:
after the first request response message sent by the second terminal is received, perform a first operation based on the first request response message, where the first operation includes at least one of the following:
based on the second indication information and the first indication information, determining that the second terminal supports the first service;
based on the terminal identifier of the first terminal in the first request response message and the terminal identifier of the first terminal in the first request message, determining that the second terminal supports the first service;
based on the terminal identifier of the second terminal in the first request response message and the terminal identifier of the second terminal in the first request message, determining that the second terminal supports the first service;
based on the second service information in the first request response message and the first service information in the first request message, determining that the second terminal supports the first service;
based on the reference signal information of the second terminal in the first request response message and the reference signal information of the first terminal in the first request message, determining that the second terminal supports the first service;
based on the algorithm information of the second terminal in the first request response message and the algorithm information of the first terminal in the first request message, determining that the second terminal supports the first service; and
based on the measurement requirement information of the second terminal in the first request response message and the measurement requirement information of the first terminal in the first request message, determining that the second terminal supports the first service.

Optionally, the first assistance information further includes at least one of the following:
capability information of the first terminal;
location information of the first terminal;
address information of the first terminal;
security information of the first terminal; and
measurement information of the first terminal.

The second assistance information further includes at least one of the following:
capability information of the second terminal;
location information of the second terminal;
address information of the second terminal;
security information of the second terminal; and
measurement information of the second terminal.

Optionally, the first configuration information includes at least one of the following:
validity time of the first configuration information;
first authorization information of the first terminal, where the first authorization information of the first terminal is used to indicate a discovery method type authorized when the first terminal is served by a radio access network;
a first authorization list of the first terminal, where the first authorization list of the first terminal is used to indicate a PLMN list to be discovered when the first terminal is served by the radio access network;
second authorization information of the first terminal, where the second authorization information of the first terminal is used to indicate a discovery method type authorized when the first terminal is not served by the radio access network;
first service information, where the first service information is used to indicate information about a service requested by the first terminal;
a terminal identifier of the first terminal, where the terminal identifier includes at least one of the following: an identity identifier, a device identifier, and a logical identifier;
security information of the first terminal, where the security information indicates a security parameter related to the first service;
algorithm information of the first terminal, where the algorithm information is used for indicating an algorithm required during use of the first service;
reference signal information of the first terminal, where the reference signal information is used for indicating a reference signal required during use of the first service;
measurement requirement information of the first terminal;
first authorization indication information, where the first authorization indication information is used to authorize the first terminal to send a reference signal; or
second authorization indication information, where the second authorization indication information is used to authorize the first terminal to determine a reference signal result.

Optionally, the apparatus further includes a second determining module, and the second determining module is configured to:
determine a reference signal transmission mode based on the first authorization indication information.

Optionally, the apparatus further includes a third determining module, and the third determining module is configured to:
determine a result determining manner based on the second authorization indication information.

Optionally, the apparatus further includes a second sending module, and the second sending module is configured to:
after the first request message is sent to the second terminal, send a second request message, where the second request message is used to request to establish a PC5 connection to the second terminal.

In this embodiment of this application, the configuration information related to a ranging-based service and/or sidelink positioning service is obtained to perform the ranging-based service and/or sidelink positioning service. In a case that a terminal supporting the ranging-based service and/or sidelink positioning service needs to be discovered, the first request message is transmitted, so that one terminal supporting the ranging-based service and/or sidelink positioning service can discover another terminal supporting ranging-based service and/or sidelink positioning service to obtain the ranging-based service and/or sidelink positioning service.

The terminal discovery apparatus in this embodiment of the application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiment of this application.

The terminal discovery apparatus provided in this embodiment of this application is capable of implementing the processes implemented in the method embodiment shown in FIG. 2 to FIG. 4, with the same technical effects achieved. To avoid repetition, details are not described herein again.

FIG. 9 is a second schematic structural diagram of a terminal discovery apparatus according to an embodiment of this application. As shown in FIG. 9, the apparatus 900 includes a second obtaining module 901 and a second receiving module 902.

The second obtaining module 901 is configured to obtain second configuration information related to a first service.

The second receiving module 902 is configured to receive a first request message sent by a first terminal.

The first request message is used for discovering a second terminal that supports the first service, and the first service is a terminal discovery related service.

In this embodiment of this application, the configuration information related to a ranging-based service and/or sidelink positioning service is obtained to perform the ranging-based service and/or sidelink positioning service. In a case that a terminal supporting the ranging-based service and/or sidelink positioning service needs to be discovered, the first request message is transmitted, so that one terminal supporting the ranging-based service and/or sidelink positioning service can discover another terminal supporting ranging-based service and/or sidelink positioning service to obtain the ranging-based service and/or sidelink positioning service.

Optionally, the apparatus further includes a third sending module, and the third sending module is configured to:
after the first request message sent by the first terminal is received, send a third request message, where the third request message is used to request to establish a PC5 connection to the first terminal.

Optionally, the first request message includes at least one of the following:
first indication information, where the first indication information is used to indicate that the first request message is used for the first service;
third indication information, where the third indication information is used to indicate the second terminal to send second assistance information, and the second assistance information is used to assist the first terminal in discovering the second terminal that supports the first service;
a first message type, where the first message type is used for indicating a message type of the first request message;
a terminal identifier of the first terminal, where the terminal identifier includes at least one of the following: an identity identifier, a device identifier, and a logical identifier;
a terminal identifier of the second terminal;
first service information, where the first service information is used to indicate information about a service requested by the first terminal;
first assistance information, where the first assistance information is used to assist the first terminal in discovering the second terminal that supports the first service;
a reference signal transmission mode; or
a result determining manner.

Optionally, the first assistance information includes at least one of the following: reference signal information of the first terminal, algorithm information of the first terminal, or measurement requirement information of the first terminal.

Optionally, the first service information includes at least one of the following: a service code corresponding to the first terminal, a service identifier corresponding to the first terminal, or a service type corresponding to the first terminal.

Optionally, the first request message further includes the address information of the first terminal and/or the address information of the second terminal; or
the address information of the first terminal and/or the address information of the second terminal are sent along with the first request message.

Optionally, the second configuration information includes at least one of the following:
validity time of the second configuration information;
first authorization information of the second terminal, where the first authorization information of the second terminal is used to indicate a discovery method type authorized when the second terminal is served by a radio access network;
a first authorization list of the second terminal, where the first authorization list of the second terminal is used to indicate a PLMN list to be discovered when the second terminal is served by the radio access network;
second authorization information of the second terminal, where the second authorization information of the second terminal is used to indicate a discovery method type authorized when the second terminal is not served by the radio access network;
second service information, where the second service information is used to indicate information about a service requested by the second terminal;
a terminal identifier of the second terminal, where the terminal identifier includes at least one of the following: an identity identifier, a device identifier, and a logical identifier;
security information of the second terminal, where the security information indicates a security parameter related to the first service;
algorithm information of the second terminal, where the algorithm information is used for indicating an algorithm required during use of the first service;
reference signal information of the second terminal, where the reference signal information is used for indicating a reference signal required during use of the first service;
measurement requirement information of the second terminal;
third authorization indication information, where the third authorization indication information is used to authorize the second terminal to send a reference signal; or
fourth authorization indication information, where the fourth authorization indication information is used to authorize the second terminal to determine a reference signal result.

Optionally, the apparatus further includes a fourth determining module, and the fourth determining module is configured to:
determine a reference signal transmission mode based on the third authorization indication information.

Optionally, the apparatus further includes a fifth determining module, and the fifth determining module is configured to:
determine a result determining manner based on the fourth authorization indication information.

Optionally, the apparatus further includes a sixth determining module, and the sixth determining module is configured to:
perform a second operation based on the first request message, where the second operation includes at least one of the following:
based on the second service information in the second configuration information and the first service information in the first request message, determining that the second terminal provides the first service;
based on the reference signal information of the second terminal in the second configuration information and the reference signal information of the first terminal in the first request message, determining that the second terminal provides the first service;
based on the algorithm information of the second terminal in the second configuration information and the algorithm information of the first terminal in the first request message, determining that the second terminal provides the first service;
based on the measurement requirement information of the second terminal in the second configuration information and the measurement requirement information of the first terminal in the first request message, determining that the second terminal provides the first service;
based on the third authorization indication information in the second configuration information and the reference signal transmission mode in the first request message, determining that the second terminal provides the first service; and
based on the fourth authorization indication information in the second configuration information and the result determining manner in the first request message, determining that the second terminal provides the first service.

Optionally, the apparatus further includes a fourth sending module, and the fourth sending module is configured to:
send a first request response message to the first terminal, where the first request response message is used to indicate that the second terminal has received the first request message of the first terminal.

Optionally, the fourth sending module is specifically configured to:
send second assistance information based on the third indication information; where the second assistance information is in the first request response message.

Optionally, the first request response message includes at least one of the following:
second indication information, used for indicating that the first request response message is used for the first service;
second message type, used for indicating a message type of the first request response message;
second service information, where the second service information is used to indicate information about a service provided by the second terminal;
a terminal identifier of the first terminal;
a terminal identifier of the second terminal;
second assistance information, where the second assistance information of the second terminal is used to assist the first terminal in discovering the second terminal that supports the first service;
a reference signal transmission mode; or
a result determining manner.

Optionally, the first request response message further includes the address information of the first terminal and/or the address information of the second terminal; or
the address information of the first terminal and/or the address information of the second terminal are sent along with the first request response message.

Optionally, the second service information includes at least one of the following: a service code corresponding to the second terminal, a service identifier corresponding to the second terminal, or a service type corresponding to the second terminal.

Optionally, the second assistance information includes at least one of the following: reference signal information of the second terminal, algorithm information of the second terminal, or measurement requirement information of the second terminal.

Optionally, the reference signal transmission mode includes at least one of the following:
the first terminal sends a reference signal;
the second terminal sends a reference signal;
the first terminal and the second terminal send a reference signal;
immediately sending a reference signal;
periodically sending a reference signal; or
an event triggers sending of a reference signal.

Optionally, the result determining manner includes at least one of the following:
the first terminal determines a first result, the second terminal determines the first result, and the first terminal and the second terminal determine the first result.

Optionally, the fourth sending module is specifically configured to:
send the first request response message to the first terminal based on first information, where the first information includes at least one of the following:
a first request message, application layer indication information, network side indication information, or pre-configuration information.

Optionally, in a case that the first information includes the application layer indication information, the fourth sending module is specifically configured to perform at least one of the following:
sending the first request response message to the first terminal based on the reference signal transmission mode in the first request message and a reference signal transmission mode included in the application layer indication information;
sending the first request response message to the first terminal based on the result determining manner in the first request message and a result determining manner included in the application layer indication information;
sending the first request response message to the first terminal based on the first service information in the first request message and service information included in the application layer indication information; or
sending the first request response message to the first terminal based on the terminal identifier of the first terminal in the first request message and a terminal identifier included in the application layer indication information.

Optionally, in a case that the first information includes the pre-configuration information, the fourth sending module is specifically configured to perform at least one of the following:
sending the first request response message to the first terminal based on the reference signal transmission mode in the first request message and a reference signal transmission mode included in the pre-configuration information;
sending the first request response message to the first terminal based on the result determining manner in the first request message and a result determining manner included in the pre-configuration information;
sending the first request response message to the first terminal based on the terminal identifier of the first terminal in the first request message and a terminal identifier of the first terminal included in the pre-configuration information;
sending the first request response message to the first terminal based on the first service information in the first request message and service information included in the pre-configuration information;
sending the first request response message to the first terminal based on the address information of the second terminal in the first request message and address information of the second terminal included in the pre-configuration information; or
sending the first request response message to the first terminal based on the terminal identifier of the second terminal in the first request message and a terminal identifier of the second terminal included in the pre-configuration information.

In this embodiment of this application, the configuration information related to a ranging-based service and/or sidelink positioning service is obtained to perform the ranging-based service and/or sidelink positioning service. In a case that a terminal supporting the ranging-based service and/or sidelink positioning service needs to be discovered, the first request message is transmitted, so that one terminal supporting the ranging-based service and/or sidelink positioning service can discover another terminal supporting ranging-based service and/or sidelink positioning service to obtain the ranging-based service and/or sidelink positioning service.

The terminal discovery apparatus in this embodiment of the application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiment of this application.

The terminal discovery apparatus in this embodiment of this application may be an apparatus with an operating system. The operating system may be an Android (Android) operating system, an iOS operating system, or other possible operating systems, and is not specifically limited in the embodiments of this application.

The terminal discovery apparatus provided in this embodiment of this application is capable of implementing the processes implemented in the method embodiment shown in FIG. 5, with the same technical effects achieved. To avoid repetition, details are not described herein again.

FIG. 10 is a third schematic structural diagram of a terminal discovery apparatus according to an embodiment of this application. As shown in FIG. 10, the apparatus 1000 includes a fifth sending module 1001.

The fifth sending module 1001 is configured to send first configuration information to a first terminal, where the first configuration information is used for a first service, and the first service includes a ranging-based service and/or a sidelink positioning service.

In this embodiment of this application, the configuration information related to a ranging-based service and/or sidelink positioning service is obtained to perform the ranging-based service and/or sidelink positioning service. In a case that a terminal supporting the ranging-based service and/or sidelink positioning service needs to be discovered, the first request message is transmitted, so that one terminal supporting the ranging-based service and/or sidelink positioning service can discover another terminal supporting ranging-based service and/or sidelink positioning service to obtain the ranging-based service and/or sidelink positioning service.

Optionally, the first configuration information includes at least one of the following:
validity time of the first configuration information;
first authorization information of the first terminal, where the first authorization information of the first terminal is used to indicate a discovery method type authorized when the first terminal is served by a radio access network;
a first authorization list of the first terminal, where the first authorization list of the first terminal is used to indicate a PLMN list to be discovered when the first terminal is served by the radio access network;
second authorization information of the first terminal, where the second authorization information of the first terminal is used to indicate a discovery method type authorized when the first terminal is not served by the radio access network;
first service information, where the first service information is used to indicate information about a service requested by the first terminal;
a terminal identifier of the first terminal, where the terminal identifier includes at least one of the following: an identity identifier, a device identifier, and a logical identifier;
security information of the first terminal, where the security information indicates a security parameter related to the first service;
algorithm information of the first terminal, where the algorithm information is used for indicating an algorithm required during use of the first service; or
reference signal information of the first terminal, where the reference signal information is used for indicating a reference signal required during use of the first service;
measurement requirement information of the first terminal;
first authorization indication information, where the first authorization indication information is used to authorize the first terminal to send a reference signal; or
second authorization indication information, where the second authorization indication information is used to authorize the first terminal to determine a reference signal result.

Optionally, the first service information includes at least one of the following: a service code corresponding to the first terminal, a service identifier corresponding to the first terminal, or a service type corresponding to the first terminal.

In this embodiment of this application, the configuration information related to a ranging-based service and/or sidelink positioning service is obtained to perform the ranging-based service and/or sidelink positioning service. In a case that a terminal supporting the ranging-based service and/or sidelink positioning service needs to be discovered, the first request message is transmitted, so that one terminal supporting the ranging-based service and/or sidelink positioning service can discover another terminal supporting ranging-based service and/or sidelink positioning service to obtain the ranging-based service and/or sidelink positioning service.

The terminal discovery apparatus in this embodiment of the application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiment of this application.

The terminal discovery apparatus provided in this embodiment of this application is capable of implementing the processes implemented in the method embodiment shown in FIG. 6, with the same technical effects achieved. To avoid repetition, details are not described herein again.

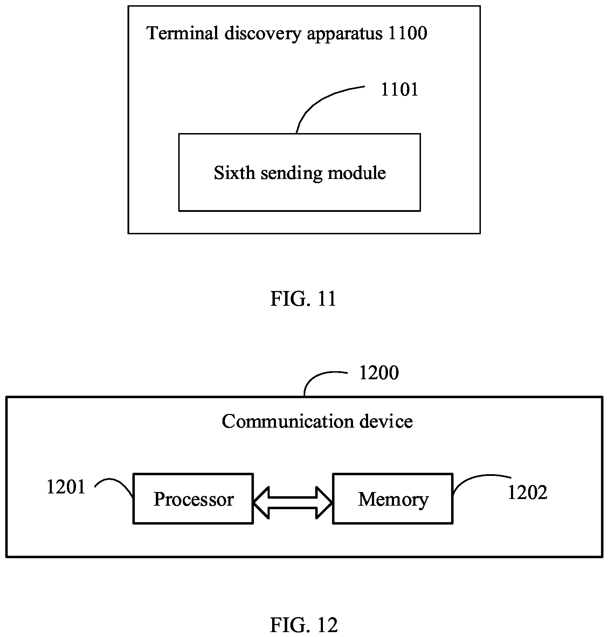

FIG. 11 is a fourth schematic structural diagram of a terminal discovery apparatus according to an embodiment of this application. As shown in FIG. 11, the apparatus 1100 includes a sixth sending module 1101.

The sixth sending module 1101 is configured to send second configuration information to a second terminal; where the second configuration information is used for a first service, and the first service includes a ranging-based service and/or a sidelink positioning service.

In this embodiment of this application, the configuration information related to a ranging-based service and/or sidelink positioning service is obtained to perform the ranging-based service and/or sidelink positioning service. In a case that a terminal supporting the ranging-based service and/or sidelink positioning service needs to be discovered, the first request message is transmitted, so that one terminal supporting the ranging-based service and/or sidelink positioning service can discover another terminal supporting ranging-based service and/or sidelink positioning service to obtain the ranging-based service and/or sidelink positioning service.

Optionally, the second configuration information includes at least one of the following:
validity time of the second configuration information;
first authorization information of the second terminal, where the first authorization information of the second terminal is used to indicate a discovery method type authorized when the second terminal is served by a radio access network;
a first authorization list of the second terminal, where the first authorization list of the second terminal is used to indicate a PLMN list to be discovered when the second terminal is served by the radio access network;
second authorization information of the second terminal, where the second authorization information of the second terminal is used to indicate a discovery method type authorized when the second terminal is not served by the radio access network;
second service information, where the second service information is used to indicate information about a service requested by the second terminal;
a terminal identifier of the second terminal, where the terminal identifier includes at least one of the following: an identity identifier, a device identifier, and a logical identifier;
security information of the second terminal, where the security information indicates a security parameter related to the first service;
algorithm information of the second terminal, where the algorithm information is used for indicating an algorithm required during use of the first service;
reference signal information of the second terminal, where the reference signal information is used for indicating a reference signal required during use of the first service;
measurement requirement information of the second terminal;
third authorization indication information, where the third authorization indication information is used to authorize the second terminal to send a reference signal; or
fourth authorization indication information, where the fourth authorization indication information is used to authorize the second terminal to determine a reference signal result.

Optionally, the second service information includes at least one of the following: a service code corresponding to the second terminal, a service identifier corresponding to the second terminal, or a service type corresponding to the second terminal.

In this embodiment of this application, the configuration information related to a ranging-based service and/or sidelink positioning service is obtained to perform the ranging-based service and/or sidelink positioning service. In a case that a terminal supporting the ranging-based service and/or sidelink positioning service needs to be discovered, the first request message is transmitted, so that one terminal supporting the ranging-based service and/or sidelink positioning service can discover another terminal supporting ranging-based service and/or sidelink positioning service to obtain the ranging-based service and/or sidelink positioning service.

The terminal discovery apparatus in this embodiment of the application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiment of this application.

The terminal discovery apparatus provided in this embodiment of this application is capable of implementing the processes implemented in the method embodiment shown in FIG. 7, with the same technical effects achieved. To avoid repetition, details are not described herein again.

Optionally, as shown in FIG. 12, an embodiment of this application further provides a communication device 1200, including a processor 1201, a memory 1202, and a program or instruction stored in the memory 1202 and capable of running on the processor 1201. For example, when the communication device 1200 is a first terminal and when the program or instruction is executed by the processor 1201, the steps of the foregoing embodiments of the terminal discovery method corresponding to the first terminal are implemented, with the same technical effects achieved. When the communication device 1200 is a second terminal and when the program or instruction is executed by the processor 1201, the steps of the foregoing embodiments of the terminal discovery method corresponding to the second terminal are implemented, with the same technical effects achieved. When the communication device 1200 is a first network-side device and when the program or instruction is executed by the processor 1201, the steps of the foregoing embodiments of the terminal discovery method corresponding to the first network-side device are implemented, with the same technical effects achieved. When the communication device 1200 is a second network-side device and when the program or instruction is executed by the processor 1201, the steps of the foregoing embodiments of the terminal discovery method corresponding to the second network-side device are implemented, with the same technical effects achieved.

An embodiment of this application further provides a first terminal, including a processor and a communication interface.

The processor is configured to obtain first configuration information related to a first service.

The communication interface is configured to send a first request message to a second terminal.

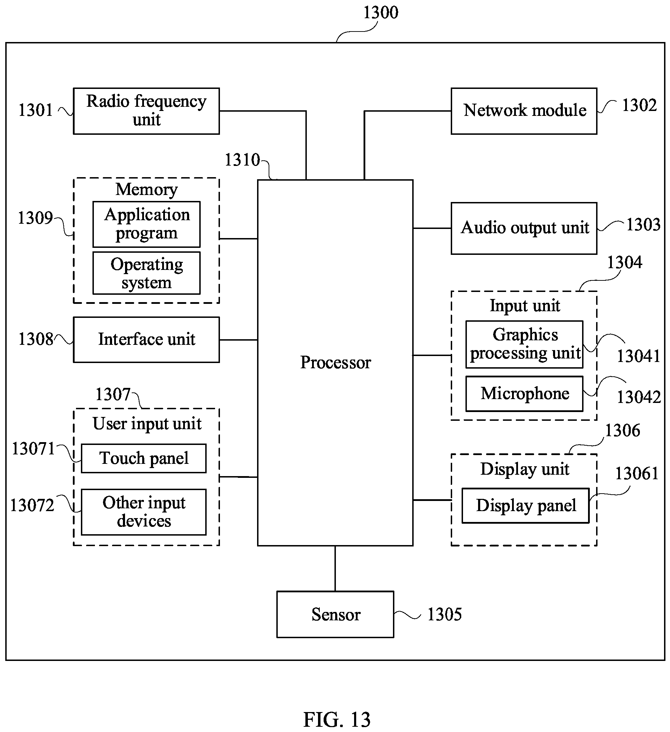

The terminal embodiments correspond to the foregoing terminal-side method embodiments, and the implementation processes and implementations of the foregoing method embodiments can be applied to the terminal embodiments, with the same technical effects achieved. Specifically, FIG. 13 is a schematic diagram of a hardware structure of a first terminal for implementing the embodiments of this application.

The terminal 1300 includes but is not limited to at least part of components such as a radio frequency unit 1301, a network module 1302, an audio output unit 1303, an input unit 1304, a sensor 1305, a display unit 1306, a user input unit 1307, an interface unit 1308, a memory 1309, and a processor 1310.

Persons skilled in the art can understand that the terminal 1300 may further include a power supply (for example, a battery) supplying power to the components, and the power supply may be logically connected to the processor 1310 through a power management system. In this way, functions such as charge management, discharge management, and power consumption management are implemented by using the power management system. The structure of the terminal shown in FIG. 13 does not constitute any limitation on the terminal. The terminal may include more or fewer components than shown in the figure, or a combination of some components, or the components disposed differently. Details are not described herein again.

It can be understood that in this embodiment of this application, the input unit 1304 may include a graphics processing unit (Graphics Processing Unit, GPU) 13041 and a microphone 13042. The graphics processing unit 13041 processes image data of a still picture or video obtained by an image capture apparatus (such as a camera) in a video capture mode or an image capture mode. The display unit 1306 may include a display panel 13061, and the display panel 13061 may be configured in a form of a liquid crystal display, an organic light-emitting diode, and the like. The user input unit 1307 may include at least one of a touch panel 13071 and other input devices 13072. The touch panel 13071 is also referred to as a touchscreen. The touch panel 13071 may include two parts: a touch detection apparatus and a touch controller. The other input devices 13072 may include but are not limited to a physical keyboard, a function key (such as a volume control key or a power on/off key), a trackball, a mouse, a joystick, and the like. Details are not described herein.

In this embodiment of this application, the radio frequency unit 1301 receives downlink data from a network-side device, and then sends the downlink data to the processor 1310 for processing. In addition, the radio frequency unit 1301 may send uplink data to the network-side device. Generally, the radio frequency unit 1301 includes but is not limited to an antenna, an amplifier, a transceiver, a coupler, a low noise amplifier, a duplexer, and the like.

The memory 1309 may be configured to store software programs or instructions and various data. The memory 1309 may include a first storage area for storing a program or instruction and a second storage area for storing data. The first storage area may store an operating system, an application program or instruction required by at least one function (for example, a sound playback function or an image playback function), and the like. In addition, the memory 1309 may include a volatile memory or a non-volatile memory, or the memory 1309 may include both a volatile memory and a non-volatile memory. The non-volatile memory may be a read-only memory (Read-Only Memory, ROM), a programmable read only memory (Programmable ROM, PROM), an erasable programmable read-only memory (Erasable PROM, EPROM), and an electrically erasable programmable read-only memory (Electrically EPROM, EEPROM), or flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 1309 in the embodiments of this application includes but is not limited to these and any other suitable types of memories.

The processor 1310 may include one or more processing units. Optionally, an application processor and a modem processor may be integrated in the processor 1310. The application processor primarily processes operations involving an operating system, user interfaces, application programs, and the like. The modem processor primarily processes radio communication signals, for example, being a baseband processor. It can be understood that the modem processor may alternatively be not integrated in the processor 1310.

The processor 1310 is configured to obtain first configuration information related to a first service.

The radio frequency unit 1301 is configured to send a first request message to a second terminal.

The first request message is used to request discovery of the second terminal supporting the first service, and the first service includes a ranging-based service and/or a sidelink positioning service.

In this embodiment of this application, the configuration information related to a ranging-based service and/or sidelink positioning service is obtained to perform the ranging-based service and/or sidelink positioning service. In a case that a terminal supporting the ranging-based service and/or sidelink positioning service needs to be discovered, the first request message is transmitted, so that one terminal supporting the ranging-based service and/or sidelink positioning service can discover another terminal supporting ranging-based service and/or sidelink positioning service to obtain the ranging-based service and/or sidelink positioning service.

Optionally, the first request message includes at least one of the following:
first indication information, where the first indication information is used to indicate that the first request message is used for the first service;
third indication information, where the third indication information is used to indicate the second terminal to send second assistance information, and the second assistance information is used to assist the first terminal in discovering the second terminal that supports the first service;
a first message type, where the first message type is used for indicating a message type of the first request message;
a terminal identifier of the first terminal, where the terminal identifier includes at least one of the following: an identity identifier, a device identifier, and a logical identifier;
a terminal identifier of the second terminal;
first service information, where the first service information is used to indicate information about a service requested by the first terminal;
first assistance information, where the first assistance information is used to assist the first terminal in discovering the second terminal that supports the first service;
a reference signal transmission mode; or
a result determining manner.

Optionally, the first assistance information includes at least one of the following: reference signal information of the first terminal, algorithm information of the first terminal, or measurement requirement information of the first terminal.

Optionally, the first service information includes at least one of the following: a service code corresponding to the first terminal, a service identifier corresponding to the first terminal, or a service type corresponding to the first terminal.

Optionally, the first request message further includes address information of the first terminal and/or address information of the second terminal; or
the address information of the first terminal and/or the address information of the second terminal are sent along with the first request message.

Optionally, the radio frequency unit 1301 is further configured to:
after the first request message is sent to the second terminal, receive a first request response message sent by the second terminal, where the first request response message is used to indicate that the second terminal has received the first request message of the first terminal.

Optionally, the first request response message includes at least one of the following:
second indication information, used for indicating that the first request response message is used for the first service;
second message type, used for indicating a message type of the first request response message;
second service information, where the second service information is used to indicate information about a service provided by the second terminal;
a terminal identifier of the first terminal;
a terminal identifier of the second terminal;
second assistance information, where the second assistance information is used to assist the first terminal in discovering the second terminal that supports the first service;
a reference signal transmission mode; or
a result determining manner.

Optionally, the second service information includes at least one of the following: a service code corresponding to the second terminal, a service identifier corresponding to the second terminal, or a service type corresponding to the second terminal.

Optionally, the first request response message further includes address information of the first terminal and/or address information of the second terminal; or
the address information of the first terminal and/or the address information of the second terminal are sent along with the first request response message.

Optionally, the second assistance information includes at least one of the following: reference signal information of the second terminal, algorithm information of the second terminal, or measurement requirement information of the second terminal.

Optionally, the reference signal transmission mode includes at least one of the following:
the first terminal sends a reference signal;
the second terminal sends a reference signal;
the first terminal and the second terminal send a reference signal;
immediately sending a reference signal;
periodically sending a reference signal; or
an event triggers sending of a reference signal.

Optionally, the result determining manner includes at least one of the following:
the first terminal determines a first result;
the second terminal determines the first result; or
the first terminal and the second terminal determine the first result.

Optionally, the processor 1310 is further configured to:
after the first request response message sent by the second terminal is received, perform a first operation based on the first request response message, where the first operation includes at least one of the following:
based on the second indication information and the first indication information, determining that the second terminal supports the first service;
based on the terminal identifier of the first terminal in the first request response message and the terminal identifier of the first terminal in the first request message, determining that the second terminal supports the first service;
based on the terminal identifier of the second terminal in the first request response message and the terminal identifier of the second terminal in the first request message, determining that the second terminal supports the first service;
based on the second service information in the first request response message and the first service information in the first request message, determining that the second terminal supports the first service;
based on the reference signal information of the second terminal in the first request response message and the reference signal information of the first terminal in the first request message, determining that the second terminal supports the first service;
based on the algorithm information of the second terminal in the first request response message and the algorithm information of the first terminal in the first request message, determining that the second terminal supports the first service; and
based on the measurement requirement information of the second terminal in the first request response message and the measurement requirement information of the first terminal in the first request message, determining that the second terminal supports the first service.

Optionally, the first assistance information further includes at least one of the following:
capability information of the first terminal;
location information of the first terminal;
address information of the first terminal;
security information of the first terminal; and
measurement information of the first terminal.

The second assistance information further includes at least one of the following:
capability information of the second terminal;
location information of the second terminal;
address information of the second terminal;
security information of the second terminal; and
measurement information of the second terminal.

Optionally, the first configuration information includes at least one of the following:
validity time of the first configuration information;
first authorization information of the first terminal, where the first authorization information of the first terminal is used to indicate a discovery method type authorized when the first terminal is served by a radio access network;
a first authorization list of the first terminal, where the first authorization list of the first terminal is used to indicate a PLMN list to be discovered when the first terminal is served by the radio access network;
second authorization information of the first terminal, where the second authorization information of the first terminal is used to indicate a discovery method type authorized when the first terminal is not served by the radio access network;
first service information, where the first service information is used to indicate information about a service requested by the first terminal;
a terminal identifier of the first terminal, where the terminal identifier includes at least one of the following: an identity identifier, a device identifier, and a logical identifier;
security information of the first terminal, where the security information indicates a security parameter related to the first service;
algorithm information of the first terminal, where the algorithm information is used for indicating an algorithm required during use of the first service;
reference signal information of the first terminal, where the reference signal information is used for indicating a reference signal required during use of the first service;
measurement requirement information of the first terminal;
first authorization indication information, where the first authorization indication information is used to authorize the first terminal to send a reference signal; or
second authorization indication information, where the second authorization indication information is used to authorize the first terminal to determine a reference signal result.

Optionally, the processor 1310 is further configured to:
determine a reference signal transmission mode based on the first authorization indication information.

Optionally, the processor 1310 is further configured to:
determine a result determining manner based on the second authorization indication information.

Optionally, the radio frequency unit 1301 is further configured to:
after the first request message is sent to the second terminal, send a second request message, where the second request message is used to request to establish a PC5 connection to the second terminal.

In this embodiment of this application, the configuration information related to a ranging-based service and/or sidelink positioning service is obtained to perform the ranging-based service and/or sidelink positioning service. In a case that a terminal supporting the ranging-based service and/or sidelink positioning service needs to be discovered, the first request message is transmitted, so that one terminal supporting the ranging-based service and/or sidelink positioning service can discover another terminal supporting ranging-based service and/or sidelink positioning service to obtain the ranging-based service and/or sidelink positioning service.

An embodiment of this application further provides a second terminal, including a processor and a communication interface.

The processor is configured to obtain second configuration information related to a first service.

The communication interface is configured to receive a first request message sent by a first terminal.

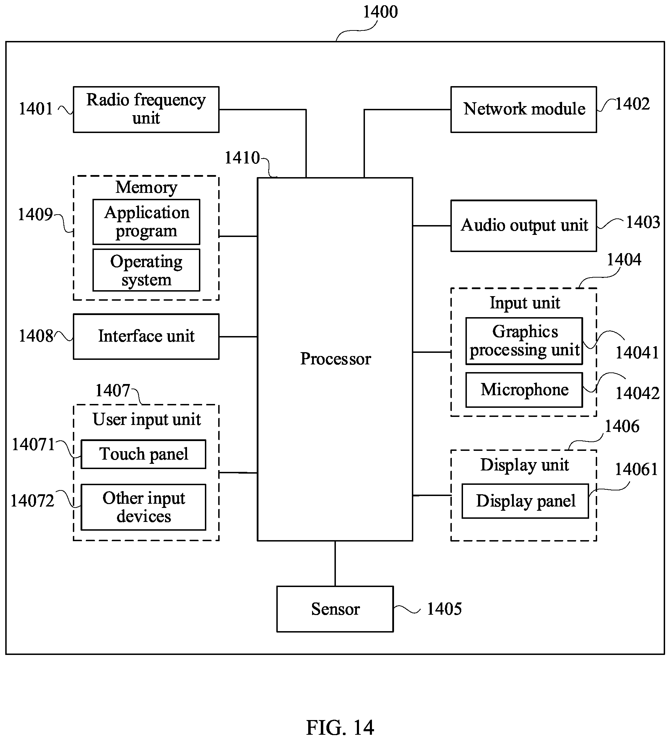

The terminal embodiments correspond to the foregoing terminal-side method embodiments, and the implementation processes and implementations of the foregoing method embodiments can be applied to the terminal embodiments, with the same technical effects achieved. Specifically, FIG. 14 is a schematic diagram of a hardware structure of a second terminal for implementing the embodiments of this application.

The terminal 1400 includes but is not limited to at least part of components such as a radio frequency unit 1401, a network module 1402, an audio output unit 1403, an input unit 1404, a sensor 1405, a display unit 1406, a user input unit 1407, an interface unit 1408, a memory 1409, and a processor 1410.

Persons skilled in the art can understand that the terminal 1400 may further include a power supply (for example, a battery) supplying power to the components, and the power supply may be logically connected to the processor 1410 through a power management system. In this way, functions such as charge management, discharge management, and power consumption management are implemented by using the power management system. The structure of the terminal shown in FIG. 14 does not constitute any limitation on the terminal. The terminal may include more or fewer components than shown in the figure, or a combination of some components, or the components disposed differently. Details are not described herein again.

It can be understood that in this embodiment of this application, the input unit 1404 may include a graphics processing unit (Graphics Processing Unit, GPU) 14041 and a microphone 14042. The graphics processing unit 14041 processes image data of a still picture or video obtained by an image capture apparatus (such as a camera) in a video capture mode or an image capture mode. The display unit 1406 may include a display panel 14061, and the display panel 14061 may be configured in a form of a liquid crystal display, an organic light-emitting diode, and the like. The user input unit 1407 may include at least one of a touch panel 14071 and other input devices 14072. The touch panel 14071 is also referred to as a touchscreen. The touch panel 14071 may include two parts: a touch detection apparatus and a touch controller. The other input devices 14072 may include but are not limited to a physical keyboard, a function key (such as a volume control key or a power on/off key), a trackball, a mouse, a joystick, and the like. Details are not described herein.

In this embodiment of this application, the radio frequency unit 1401 receives downlink data from a network-side device, and then sends the downlink data to the processor 1410 for processing. In addition, the radio frequency unit 1401 may send uplink data to the network-side device. Generally, the radio frequency unit 1401 includes but is not limited to an antenna, an amplifier, a transceiver, a coupler, a low noise amplifier, a duplexer, and the like.

The memory 1409 may be configured to store software programs or instructions and various data. The memory 1409 may include a first storage area for storing a program or instruction and a second storage area for storing data. The first storage area may store an operating system, an application program or instruction required by at least one function (for example, a sound playback function or an image playback function), and the like. In addition, the memory 1409 may include a volatile memory or a non-volatile memory, or the memory 1409 may include both a volatile memory and a non-volatile memory. The non-volatile memory may be a read-only memory (Read-Only Memory, ROM), a programmable read only memory (Programmable ROM, PROM), an erasable programmable read-only memory (Erasable PROM, EPROM), and an electrically erasable programmable read-only memory (Electrically EPROM, EEPROM), or flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 1409 in the embodiments of this application includes but is not limited to these and any other suitable types of memories.

The processor 1410 may include one or more processing units. Optionally, an application processor and a modem processor may be integrated in the processor 1410. The application processor primarily processes operations involving an operating system, user interfaces, application programs, and the like. The modem processor primarily processes radio communication signals, for example, being a baseband processor. It can be understood that the modem processor may alternatively be not integrated in the processor 1410.

The processor 1410 is configured to obtain second configuration information related to a first service.

The radio frequency unit 1401 is configured to receive a first request message sent by a first terminal.

The first request message is used for discovering a second terminal that supports the first service, and the first service is a terminal discovery related service.

In this embodiment of this application, the configuration information related to a ranging-based service and/or sidelink positioning service is obtained to perform the ranging-based service and/or sidelink positioning service. In a case that a terminal supporting the ranging-based service and/or sidelink positioning service needs to be discovered, the first request message is transmitted, so that one terminal supporting the ranging-based service and/or sidelink positioning service can discover another terminal supporting ranging-based service and/or sidelink positioning service to obtain the ranging-based service and/or sidelink positioning service.

Optionally, the radio frequency unit 1401 is further configured to:
after the first request message sent by the first terminal is received, send the third request message, where the third request message is used to request to establish a PC5 connection to the first terminal.

Optionally, the first request message includes at least one of the following:
first indication information, where the first indication information is used to indicate that the first request message is used for the first service;
third indication information, where the third indication information is used to indicate the second terminal to send second assistance information, and the second assistance information is used to assist the first terminal in discovering the second terminal that supports the first service;
a first message type, where the first message type is used for indicating a message type of the first request message;
a terminal identifier of the first terminal, where the terminal identifier includes at least one of the following: an identity identifier, a device identifier, and a logical identifier;
a terminal identifier of the second terminal;
first service information, where the first service information is used to indicate information about a service requested by the first terminal;
first assistance information, where the first assistance information is used to assist the first terminal in discovering the second terminal that supports the first service;
a reference signal transmission mode; or
a result determining manner.

Optionally, the first assistance information includes at least one of the following: reference signal information of the first terminal, algorithm information of the first terminal, or measurement requirement information of the first terminal.

Optionally, the first service information includes at least one of the following: a service code corresponding to the first terminal, a service identifier corresponding to the first terminal, or a service type corresponding to the first terminal.

Optionally, the first request message further includes the address information of the first terminal and/or the address information of the second terminal; or
the address information of the first terminal and/or the address information of the second terminal are sent along with the first request message.

Optionally, the second configuration information includes at least one of the following:
validity time of the second configuration information;
first authorization information of the second terminal, where the first authorization information of the second terminal is used to indicate a discovery method type authorized when the second terminal is served by a radio access network;
a first authorization list of the second terminal, where the first authorization list of the second terminal is used to indicate a PLMN list to be discovered when the second terminal is served by the radio access network;
second authorization information of the second terminal, where the second authorization information of the second terminal is used to indicate a discovery method type authorized when the second terminal is not served by the radio access network;
second service information, where the second service information is used to indicate information about a service requested by the second terminal;
a terminal identifier of the second terminal, where the terminal identifier includes at least one of the following: an identity identifier, a device identifier, and a logical identifier;
security information of the second terminal, where the security information indicates a security parameter related to the first service;
algorithm information of the second terminal, where the algorithm information is used for indicating an algorithm required during use of the first service;
reference signal information of the second terminal, where the reference signal information is used for indicating a reference signal required during use of the first service;
measurement requirement information of the second terminal;
third authorization indication information, where the third authorization indication information is used to authorize the second terminal to send a reference signal; or
fourth authorization indication information, where the fourth authorization indication information is used to authorize the second terminal to determine a reference signal result.

Optionally, the processor 1410 is further configured to:
determine a reference signal transmission mode based on the third authorization indication information.

Optionally, the processor 1410 is further configured to:
determine a result determining manner based on the fourth authorization indication information.

Optionally, the processor 1410 is further configured to:
perform a second operation based on the first request message, where the second operation includes at least one of the following:
based on the second service information in the second configuration information and the first service information in the first request message, determining that the second terminal provides the first service;
based on the reference signal information of the second terminal in the second configuration information and the reference signal information of the first terminal in the first request message, determining that the second terminal provides the first service;
based on the algorithm information of the second terminal in the second configuration information and the algorithm information of the first terminal in the first request message, determining that the second terminal provides the first service;
based on the measurement requirement information of the second terminal in the second configuration information and the measurement requirement information of the first terminal in the first request message, determining that the second terminal provides the first service;
based on the third authorization indication information in the second configuration information and the reference signal transmission mode in the first request message, determining that the second terminal provides the first service; and
based on the fourth authorization indication information in the second configuration information and the result determining manner in the first request message, determining that the second terminal provides the first service.

Optionally, the radio frequency unit 1401 is further configured to:
send a first request response message to the first terminal, where the first request response message is used to indicate that the second terminal has received the first request message of the first terminal.

Optionally, the radio frequency unit 1401 is further configured to:
send second assistance information based on the third indication information; where the second assistance information is in the first request response message.

Optionally, the first request response message includes at least one of the following:
second indication information, used for indicating that the first request response message is used for the first service;
second message type, used for indicating a message type of the first request response message;
second service information, where the second service information is used to indicate information about a service provided by the second terminal;
a terminal identifier of the first terminal;
a terminal identifier of the second terminal;
second assistance information, where the second assistance information of the second terminal is used to assist the first terminal in discovering the second terminal that supports the first service;
a reference signal transmission mode; or
a result determining manner.

Optionally, the first request response message further includes the address information of the first terminal and/or the address information of the second terminal; or
the address information of the first terminal and/or the address information of the second terminal are sent along with the first request response message.

Optionally, the second service information includes at least one of the following: a service code corresponding to the second terminal, a service identifier corresponding to the second terminal, or a service type corresponding to the second terminal.

Optionally, the second assistance information includes at least one of the following: reference signal information of the second terminal, algorithm information of the second terminal, or measurement requirement information of the second terminal.

Optionally, the reference signal transmission mode includes at least one of the following:
the first terminal sends a reference signal;
the second terminal sends a reference signal;
the first terminal and the second terminal send a reference signal;
immediately sending a reference signal;
periodically sending a reference signal; or
an event triggers sending of a reference signal.

Optionally, the result determining manner includes at least one of the following:
the first terminal determines a first result, the second terminal determines the first result, and the first terminal and the second terminal determine the first result.

Optionally, the radio frequency unit 1401 is further configured to:
send the first request response message to the first terminal based on first information, where the first information includes at least one of the following:
a first request message, application layer indication information, network side indication information, or pre-configuration information.

Optionally, the radio frequency unit 1401 is further configured to perform at least one of the following:
sending the first request response message to the first terminal based on the reference signal transmission mode in the first request message and a reference signal transmission mode included in the application layer indication information;
sending the first request response message to the first terminal based on the result determining manner in the first request message and a result determining manner included in the application layer indication information;
sending the first request response message to the first terminal based on the first service information in the first request message and service information included in the application layer indication information; or
sending the first request response message to the first terminal based on the terminal identifier of the first terminal in the first request message and a terminal identifier included in the application layer indication information.

Optionally, the radio frequency unit 1401 is further configured to perform at least one of the following:
sending the first request response message to the first terminal based on the reference signal transmission mode in the first request message and a reference signal transmission mode included in the pre-configuration information;
sending the first request response message to the first terminal based on the result determining manner in the first request message and a result determining manner included in the pre-configuration information;
sending the first request response message to the first terminal based on the terminal identifier of the first terminal in the first request message and a terminal identifier of the first terminal included in the pre-configuration information;
sending the first request response message to the first terminal based on the first service information in the first request message and service information included in the pre-configuration information;
sending the first request response message to the first terminal based on the address information of the second terminal in the first request message and address information of the second terminal included in the pre-configuration information; or
sending the first request response message to the first terminal based on the terminal identifier of the second terminal in the first request message and a terminal identifier of the second terminal included in the pre-configuration information.

In this embodiment of this application, the configuration information related to a ranging-based service and/or sidelink positioning service is obtained to perform the ranging-based service and/or sidelink positioning service. In a case that a terminal supporting the ranging-based service and/or sidelink positioning service needs to be discovered, the first request message is transmitted, so that one terminal supporting the ranging-based service and/or sidelink positioning service can discover another terminal supporting ranging-based service and/or sidelink positioning service to obtain the ranging-based service and/or sidelink positioning service.

An embodiment of this application further provides a first network-side device, including a processor and a communication interface.

The communication interface is configured to send first configuration information to a first terminal, where the first configuration information is used for a first service, and the first service includes a ranging-based service and/or a sidelink positioning service.

The first network-side device embodiments correspond to the foregoing first network-side device method embodiments, and the implementation processes and implementations of the foregoing method embodiments can be applied to the first network-side device embodiments, with the same technical effects achieved.

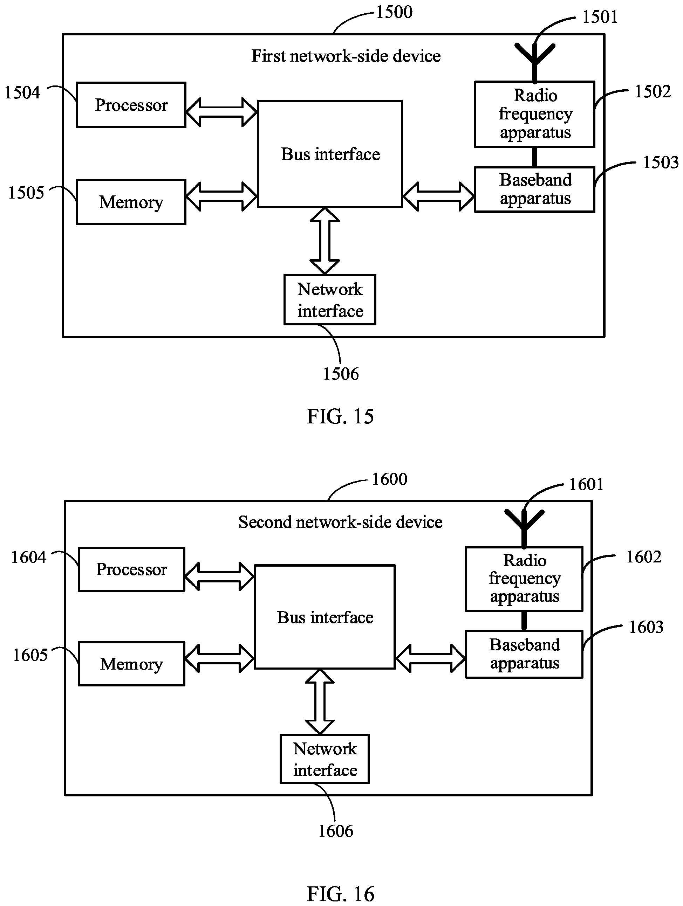

Specifically, an embodiment of this application further provides a first network-side device. FIG. 15 is a schematic diagram of a hardware structure of a first network-side device for implementing the embodiments of this application. As shown in FIG. 15, the first network-side device 1500 includes an antenna 1501, a radio frequency apparatus 1502, a baseband apparatus 1503, a processor 1504, and a memory 1505. The antenna 1501 is connected to the radio frequency apparatus 1502. In an uplink direction, the radio frequency apparatus 1502 receives information by using the antenna 1501, and sends the received information to the baseband apparatus 1503 for processing. In a downlink direction, the baseband apparatus 1503 processes to-be-sent information, and sends the information to the radio frequency apparatus 1502; and the radio frequency apparatus 1502 processes the received information and then sends the information out by using the antenna 1501.

The method executed by the first network-side device in the foregoing embodiments can be implemented in the baseband apparatus 1503, and the baseband apparatus 1503 includes a baseband processor.

The baseband apparatus 1503 may include, for example, at least one baseband board, where a plurality of chips are disposed on the baseband board. As shown in FIG. 15, one of the chips is, for example, a baseband processor, and is connected to the memory 1505 through the bus interface, to invoke a program in the memory 1505 to perform the operations of the network device shown in the foregoing method embodiments.

The first network-side device may further include a network interface 1506, where the interface is, for example, a common public radio interface (common public radio interface, CPRI).

Specifically, the first network-side device 1500 in this embodiment of the present invention further includes: an instruction or program stored in the memory 1505 and capable of running on the processor 1504. The processor 1504 invokes the instruction or program in the memory 1505 to execute the method executed by the modules shown in FIG. 10, with the same technical effects achieved. To avoid repetition, details are not repeated herein.

An embodiment of this application further provides a second network-side device, including a processor and a communication interface.

The communication interface is configured to send second configuration information to a second terminal; where the second configuration information is used for a first service, and the first service includes a ranging-based service and/or a sidelink positioning service.

The second network-side device embodiments correspond to the foregoing second network-side device method embodiments, and the implementation processes and implementations of the foregoing method embodiments can be applied to the second network-side device embodiments, with the same technical effects achieved.

Specifically, an embodiment of this application further provides a second network-side device. FIG. 16 is a schematic diagram of a hardware structure of a second network-side device for implementing the embodiments of this application. As shown in FIG. 16, the second network-side device 1600 includes an antenna 1601, a radio frequency apparatus 1602, a baseband apparatus 1603, a processor 1604, and a memory 1605. The antenna 1601 is connected to the radio frequency apparatus 1602. In an uplink direction, the radio frequency apparatus 1602 receives information by using the antenna 1601, and sends the received information to the baseband apparatus 1603 for processing. In a downlink direction, the baseband apparatus 1603 processes to-be-sent information, and sends the information to the radio frequency apparatus 1602; and the radio frequency apparatus 1602 processes the received information and then sends the information out by using the antenna 1601.

The method executed by the second network-side device in the foregoing embodiments can be implemented in the baseband apparatus 1603, and the baseband apparatus 1603 includes a baseband processor.

The baseband apparatus 1603 may include, for example, at least one baseband board, where a plurality of chips are disposed on the baseband board. As shown in FIG. 16, one of the chips is, for example, a baseband processor, and is connected to the memory 1605 through the bus interface, to invoke a program in the memory 1605 to perform the operations of the network device shown in the foregoing method embodiments.

The second network-side device may further include a network interface 1606, where the interface is, for example, a common public radio interface (common public radio interface, CPRI).

Specifically, the second network-side device 1600 in this embodiment of the present invention further includes: an instruction or program stored in the memory 1605 and capable of running on the processor 1604. The processor 1604 invokes the instruction or program in the memory 1605 to execute the method executed by the modules shown in FIG. 11, with the same technical effects achieved. To avoid repetition, details are not repeated herein.

An embodiment of this application further provides a readable storage medium, where a program or instruction is stored in the readable storage medium. When the program or instruction is executed by a processor, the processes of the foregoing embodiment of the terminal discovery method can be implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communications interface. The communications interface is coupled to the processor, and the processor is configured to run a program or instruction to implement the processes of the foregoing embodiments of the terminal discovery method, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing embodiments of the terminal discovery method, with the same technical effects achieved. To avoid repetition, details are not repeated herein.

An embodiment of the application further provides a terminal discovery system, including a first terminal, a second terminal, a first network-side device, and a second network-side device, where the first terminal can be configured to perform the steps of the terminal discovery method as described above, the second terminal can be configured to perform the steps of the terminal discovery method as described above, the first network-side device can be configured to perform the steps of the terminal discovery method as described above, and the second network-side device can be configured to perform the steps of the terminal discovery method as described above.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A terminal discovery method, comprising:
obtaining, by a first terminal, first configuration information related to a first service; and
sending, by the first terminal, a first request message to a second terminal; wherein
the first request message is used to request discovery of the second terminal supporting the first service, and the first service comprises a ranging-based service and/or a sidelink positioning service.

2. The terminal discovery method according to claim 1, wherein the first request message comprises at least one of the following:
first indication information, wherein the first indication information is used to indicate that the first request message is used for the first service;
third indication information, wherein the third indication information is used to indicate the second terminal to send second assistance information, and the second assistance information is used to assist the first terminal in discovering the second terminal that supports the first service;
a first message type, wherein the first message type is used for indicating a message type of the first request message;
a terminal identifier of the first terminal, wherein the terminal identifier comprises at least one of the following: an identity identifier, a device identifier, and a logical identifier;
a terminal identifier of the second terminal;
first service information, wherein the first service information is used to indicate information about a service requested by the first terminal;
first assistance information, wherein the first assistance information is used to assist the first terminal in discovering the second terminal that supports the first service;
a reference signal transmission mode; or
a result determining manner.

3. The terminal discovery method according to claim 2, wherein the first assistance information comprises at least one of the following: reference signal information of the first terminal, algorithm information of the first terminal, or measurement requirement information of the first terminal.

4. The terminal discovery method according to claim 2 or 3, wherein the first service information comprises at least one of the following: a service code corresponding to the first terminal, a service identifier corresponding to the first terminal, or a service type corresponding to the first terminal.

5. The terminal discovery method according to any one of claims 2 to 4, wherein the first request message further comprises address information of the first terminal and/or address information of the second terminal; or
the address information of the first terminal and/or the address information of the second terminal are sent along with the first request message.

6. The terminal discovery method according to any one of claims 1 to 5, wherein after the sending, by the first terminal, a first request message to a second terminal, the method further comprises:
receiving, by the first terminal, a first request response message sent by the second terminal, wherein the first request response message is used to indicate that the second terminal has received the first request message of the first terminal.

7. The terminal discovery method according to claim 6, wherein the first request response message comprises at least one of the following:
second indication information, used for indicating that the first request response message is used for the first service;
second message type, used for indicating a message type of the first request response message;
second service information, wherein the second service information is used to indicate information about a service provided by the second terminal;
a terminal identifier of the first terminal;
a terminal identifier of the second terminal;
second assistance information, wherein the second assistance information is used to assist the first terminal in discovering the second terminal that supports the first service;
a reference signal transmission mode; or
a result determining manner.

8. The terminal discovery method according to claim 7, wherein the second service information comprises at least one of the following: a service code corresponding to the second terminal, a service identifier corresponding to the second terminal, or a service type corresponding to the second terminal.

9. The terminal discovery method according to claim 7 or 8, wherein the first request response message further comprises the address information of the first terminal and/or the address information of the second terminal; or
the address information of the first terminal and/or the address information of the second terminal are sent along with the first request response message.

10. The terminal discovery method according to any one of claims 2 to 5 or any one of claims 7 to 9, wherein the second assistance information comprises at least one of the following: reference signal information of the second terminal, algorithm information of the second terminal, or measurement requirement information of the second terminal.

11. The method according to any one of claims 2 to 5 or any one of claims 7 to 10, wherein the reference signal transmission mode comprises at least one of the following:
the first terminal sends a reference signal;
the second terminal sends a reference signal;
the first terminal and the second terminal send a reference signal;
immediately sending a reference signal;
periodically sending a reference signal; or
an event triggers sending of a reference signal.

12. The method according to any one of claims 2 to 5 or any one of claims 7 to 11, wherein the result determining manner comprises at least one of the following:
the first terminal determines a first result;
the second terminal determines the first result; or
the first terminal and the second terminal determine the first result.

13. The terminal discovery method according to any one of claims 6 to 9, wherein after the receiving, by the first terminal, a first request response message sent by the second terminal, the method further comprises:
performing, by the first terminal, a first operation based on the first request response message, wherein the first operation comprises at least one of the following:
based on the second indication information and the first indication information, the first terminal determines that the second terminal supports the first service;
based on the terminal identifier of the first terminal in the first request response message and the terminal identifier of the first terminal in the first request message, the first terminal determines that the second terminal supports the first service;
based on the terminal identifier of the second terminal in the first request response message and the terminal identifier of the second terminal in the first request message, the first terminal determines that the second terminal supports the first service;
based on the second service information in the first request response message and the first service information in the first request message, the first terminal determines that the second terminal supports the first service;
based on the reference signal information of the second terminal in the first request response message and the reference signal information of the first terminal in the first request message, the first terminal determines that the second terminal supports the first service;
based on the algorithm information of the second terminal in the first request response message and the algorithm information of the first terminal in the first request message, the first terminal determines that the second terminal supports the first service; and
based on the measurement requirement information of the second terminal in the first request response message and the measurement requirement information of the first terminal in the first request message, the first terminal determines that the second terminal supports the first service.

14. The terminal discovery method according to any one of claims 2 to 5, wherein the first assistance information further comprises at least one of the following:
capability information of the first terminal;
location information of the first terminal;
address information of the first terminal;
security information of the first terminal; and
measurement information of the first terminal; and
the second assistance information further comprises at least one of the following:
capability information of the second terminal;
location information of the second terminal;
address information of the second terminal;
security information of the second terminal; and
measurement information of the second terminal.

15. The terminal discovery method according to any one of claims 1 to 14, wherein the first configuration information comprises at least one of the following:
validity time of the first configuration information;
first authorization information of the first terminal, wherein the first authorization information of the first terminal is used to indicate a discovery method type authorized when the first terminal is served by a radio access network;
a first authorization list of the first terminal, wherein the first authorization list of the first terminal is used to indicate a PLMN list to be discovered when the first terminal is served by the radio access network;
second authorization information of the first terminal, wherein the second authorization information of the first terminal is used to indicate a discovery method type authorized when the first terminal is not served by the radio access network;
first service information, wherein the first service information is used to indicate information about a service requested by the first terminal;
a terminal identifier of the first terminal, wherein the terminal identifier comprises at least one of the following: an identity identifier, a device identifier, and a logical identifier;
security information of the first terminal, wherein the security information indicates a security parameter related to the first service;
algorithm information of the first terminal, wherein the algorithm information is used for indicating an algorithm required during use of the first service;
reference signal information of the first terminal, wherein the reference signal information is used for indicating a reference signal required during use of the first service;
measurement requirement information of the first terminal;
first authorization indication information, wherein the first authorization indication information is used to authorize the first terminal to send a reference signal; or
second authorization indication information, wherein the second authorization indication information is used to authorize the first terminal to determine a reference signal result.

16. The terminal discovery method according to claim 15, wherein the method further comprises:
determining, by the first terminal, a reference signal transmission mode based on the first authorization indication information.

17. The terminal discovery method according to claim 15, wherein the method further comprises:
determining, by the first terminal, a result determining manner based on the second authorization indication information.

18. The terminal discovery method according to any one of claims 1 to 17, wherein after the sending, by the first terminal, a first request message to a second terminal, the method further comprises:
sending, by the first terminal, a second request message, wherein the second request message is used to request to establish a PC5 connection to the second terminal.

19. A terminal discovery method, comprising:
obtaining, by a second terminal, second configuration information related to a first service; and
receiving, by the second terminal, a first request message sent by a first terminal; wherein
the first request message is used for discovering a second terminal that supports the first service, and the first service is a terminal discovery related service.

20. The terminal discovery method according to claim 19, wherein after the receiving, by the second terminal, a first request message sent by a first terminal, the method further comprises:
sending, by the second terminal, a third request message, wherein the third request message is used to request to establish a PC5 connection to the first terminal.

21. The terminal discovery method according to claim 19 or 20, wherein the first request message comprises at least one of the following:
first indication information, wherein the first indication information is used to indicate that the first request message is used for the first service;
third indication information, wherein the third indication information is used to indicate the second terminal to send second assistance information, and the second assistance information is used to assist the first terminal in discovering the second terminal that supports the first service;
a first message type, wherein the first message type is used for indicating a message type of the first request message;
a terminal identifier of the first terminal, wherein the terminal identifier comprises at least one of the following: an identity identifier, a device identifier, and a logical identifier;
a terminal identifier of the second terminal;
first service information, wherein the first service information is used to indicate information about a service requested by the first terminal;
first assistance information, wherein the first assistance information is used to assist the first terminal in discovering the second terminal that supports the first service;
a reference signal transmission mode; or
a result determining manner.

22. The terminal discovery method according to claim 21, wherein the first assistance information comprises at least one of the following: reference signal information of the first terminal, algorithm information of the first terminal, or measurement requirement information of the first terminal.

23. The terminal discovery method according to claim 21 or 22, wherein the first service information comprises at least one of the following: a service code corresponding to the first terminal, a service identifier corresponding to the first terminal, or a service type corresponding to the first terminal.

24. The terminal discovery method according to any one of claims 21 to 23, wherein the first request message further comprises address information of the first terminal and/or address information of the second terminal; or
the address information of the first terminal and/or the address information of the second terminal are sent along with the first request message.

25. The terminal discovery method according to any one of claims 19 to 24, wherein the second configuration information comprises at least one of the following:
validity time of the second configuration information;
first authorization information of the second terminal, wherein the first authorization information of the second terminal is used to indicate a discovery method type authorized when the second terminal is served by a radio access network;
a first authorization list of the second terminal, wherein the first authorization list is used to indicate a PLMN list to be discovered when the second terminal is served by the radio access network;
second authorization information of the second terminal, wherein the second authorization information of the second terminal is used to indicate a discovery method type authorized when the second terminal is not served by the radio access network;
second service information, wherein the second service information is used to indicate information about a service requested by the second terminal;
a terminal identifier of the second terminal, wherein the terminal identifier comprises at least one of the following: an identity identifier, a device identifier, and a logical identifier;
security information of the second terminal, wherein the security information indicates a security parameter related to the first service;
algorithm information of the second terminal, wherein the algorithm information is used for indicating an algorithm required during use of the first service; or
reference signal information of the second terminal, wherein the reference signal information is used for indicating a reference signal required during use of the first service;
measurement requirement information of the second terminal;
third authorization indication information, wherein the third authorization indication information is used to authorize the second terminal to send a reference signal; or
fourth authorization indication information, wherein the fourth authorization indication information is used to authorize the second terminal to determine a reference signal result.

26. The terminal discovery method according to claim 25, wherein the method further comprises:
determining, by the second terminal, a reference signal transmission mode based on the third authorization indication information.

27. The terminal discovery method according to claim 25, wherein the method further comprises:
determining, by the second terminal, a result determining manner based on the fourth authorization indication information.

28. The terminal discovery method according to any one of claims 25 to 27, wherein the method further comprises:
performing, by the second terminal, a second operation based on the first request message, wherein the second operation comprises at least one of the following:
based on the second service information in the second configuration information and the first service information in the first request message, the second terminal determines that the second terminal provides the first service;
based on the reference signal information of the second terminal in the second configuration information and the reference signal information of the first terminal in the first request message, the second terminal determines that the second terminal provides the first service;
based on the algorithm information of the second terminal in the second configuration information and the algorithm information of the first terminal in the first request message, the second terminal determines that the second terminal provides the first service;
based on the measurement requirement information of the second terminal in the second configuration information and the measurement requirement information of the first terminal in the first request message, the second terminal determines that the second terminal provides the first service;
based on the third authorization indication information in the second configuration information and the reference signal transmission mode in the first request message, the second terminal determines that the second terminal provides the first service; and
based on the fourth authorization indication information in the second configuration information and the result determining manner in the first request message, the second terminal determines that the second terminal provides the first service.

29. The terminal discovery method according to any one of claims 19 to 27, wherein the method further comprises:
sending, by the second terminal, a first request response message to the first terminal, wherein the first request response message is used to indicate that the second terminal has received the first request message of the first terminal.

30. The terminal discovery method according to claim 29, wherein the sending, by the second terminal, a first request response message to the first terminal comprises:
sending, by the second terminal, second assistance information based on the third indication information; wherein the second assistance information is in the first request response message.

31. The terminal discovery method according to claim 29 or 30, wherein the first request response message comprises at least one of the following:
second indication information, used for indicating that the first request response message is used for the first service;
second message type, used for indicating a message type of the first request response message;
second service information, wherein the second service information is used to indicate information about a service provided by the second terminal;
a terminal identifier of the first terminal;
a terminal identifier of the second terminal;
second assistance information, wherein the second assistance information of the second terminal is used to assist the first terminal in discovering the second terminal that supports the first service;
a reference signal transmission mode; or
a result determining manner.

32. The terminal discovery method according to claim 31, wherein the first request response message further comprises the address information of the first terminal and/or the address information of the second terminal; or
the address information of the first terminal and/or the address information of the second terminal are sent along with the first request response message.

33. The terminal discovery method according to any one of claims 25 to 28 or claim 31 or 32, wherein the second service information comprises at least one of the following: a service code corresponding to the second terminal, a service identifier corresponding to the second terminal, or a service type corresponding to the second terminal.

34. The terminal discovery method according to any one of claims 21 to 28 or any one of claims 31 to 33, wherein the second assistance information comprises at least one of the following: reference signal information of the second terminal, algorithm information of the second terminal, or measurement requirement information of the second terminal.

35. The terminal discovery method according to any one of claims 21 to 28 or any one of claims 31 to 34, wherein the reference signal transmission mode comprises at least one of the following:
the first terminal sends a reference signal;
the second terminal sends a reference signal;
the first terminal and the second terminal send a reference signal;
immediately sending a reference signal;
periodically sending a reference signal; or
an event triggers sending of a reference signal.

36. The method according to any one of claims 21 to 28 or any one of claims 31 to 34, wherein the result determining manner comprises at least one of the following:
the first terminal determines a first result, the second terminal determines the first result, and the first terminal and the second terminal determine the first result.

37. The terminal discovery method according to any one of claims 29 to 32, wherein the sending, by the second terminal, a first request response message to the first terminal comprises:
sending, by the second terminal, the first request response message to the first terminal based on first information, wherein the first information comprises at least one of the following:
a first request message, application layer indication information, network side indication information, or pre-configuration information.

38. The terminal discovery method according to claim 37, wherein in a case that the first information comprises the application layer indication information, the sending, by the second terminal, the first request response message to the first terminal based on first information comprises at least one of the following:
sending, by the second terminal, the first request response message to the first terminal based on the reference signal transmission mode in the first request message and a reference signal transmission mode comprised in the application layer indication information;
sending, by the second terminal, the first request response message to the first terminal based on the result determining manner in the first request message and a result determining manner comprised in the application layer indication information;
sending, by the second terminal, the first request response message to the first terminal based on the first service information in the first request message and service information comprised in the application layer indication information; or
sending, by the second terminal, the first request response message to the first terminal based on the terminal identifier of the first terminal in the first request message and a terminal identifier comprised in the application layer indication information.

39. The terminal discovery method according to claim 37, wherein in a case that the first information comprises the pre-configuration information, the sending, by the second terminal, a first request response message to the first terminal based on first information comprises at least one of the following:
sending, by the second terminal, the first request response message to the first terminal based on the reference signal transmission mode in the first request message and a reference signal transmission mode comprised in the pre-configuration information;
sending, by the second terminal, the first request response message to the first terminal based on the result determining manner in the first request message and a result determining manner comprised in the pre-configuration information;
sending, by the second terminal, the first request response message to the first terminal based on the terminal identifier of the first terminal in the first request message and a terminal identifier of the first terminal comprised in the pre-configuration information;
sending, by the second terminal, the first request response message to the first terminal based on the first service information in the first request message and service information comprised in the pre-configuration information;
sending, by the second terminal, the first request response message to the first terminal based on the address information of the second terminal in the first request message and address information of the second terminal comprised in the pre-configuration information; or
sending, by the second terminal, the first request response message to the first terminal based on the terminal identifier of the second terminal in the first request message and a terminal identifier of the second terminal comprised in the pre-configuration information.

40. A terminal discovery method, comprising:
sending, by a first network side, first configuration information to a first terminal, wherein the first configuration information is used for a first service, and the first service comprises a ranging-based service and/or a sidelink positioning service.

41. The terminal discovery method according to claim 40, wherein the first configuration information comprises at least one of the following:
validity time of the first configuration information;
first authorization information of the first terminal, wherein the first authorization information of the first terminal is used to indicate a discovery method type authorized when the first terminal is served by a radio access network;
a first authorization list of the first terminal, wherein the first authorization list of the first terminal is used to indicate a PLMN list to be discovered when the first terminal is served by the radio access network;
second authorization information of the first terminal, wherein the second authorization information of the first terminal is used to indicate a discovery method type authorized when the first terminal is not served by the radio access network;
first service information, wherein the first service information is used to indicate information about a service requested by the first terminal;
a terminal identifier of the first terminal, wherein the terminal identifier comprises at least one of the following: an identity identifier, a device identifier, and a logical identifier;
security information of the first terminal, wherein the security information indicates a security parameter related to the first service;
algorithm information of the first terminal, wherein the algorithm information is used for indicating an algorithm required during use of the first service; or
reference signal information of the first terminal, wherein the reference signal information is used for indicating a reference signal required during use of the first service;
measurement requirement information of the first terminal;
first authorization indication information, wherein the first authorization indication information is used to authorize the first terminal to send a reference signal; or
second authorization indication information, wherein the second authorization indication information is used to authorize the first terminal to determine a reference signal result.

42. The terminal discovery method according to claim 41, wherein the first service information comprises at least one of the following: a service code corresponding to the first terminal, a service identifier corresponding to the first terminal, or a service type corresponding to the first terminal.

43. A terminal discovery method, comprising:
sending, by a second network side, second configuration information to a second terminal; wherein the second configuration information is used for a first service, and the first service comprises a ranging-based service and/or a sidelink positioning service.

44. The terminal discovery method according to claim 43, wherein the second configuration information comprises at least one of the following:
validity time of the second configuration information;
first authorization information of the second terminal, wherein the first authorization information of the second terminal is used to indicate a discovery method type authorized when the second terminal is served by a radio access network;
a first authorization list of the second terminal, wherein the first authorization list of the second terminal is used to indicate a PLMN list to be discovered when the second terminal is served by the radio access network;
second authorization information of the second terminal, wherein the second authorization information of the second terminal is used to indicate a discovery method type authorized when the second terminal is not served by the radio access network;
second service information, wherein the second service information is used to indicate information about a service requested by the second terminal;
a terminal identifier of the second terminal, wherein the terminal identifier comprises at least one of the following: an identity identifier, a device identifier, and a logical identifier;
security information of the second terminal, wherein the security information indicates a security parameter related to the first service;
algorithm information of the second terminal, wherein the algorithm information is used for indicating an algorithm required during use of the first service; or
reference signal information of the second terminal, wherein the reference signal information is used for indicating a reference signal required during use of the first service;
measurement requirement information of the second terminal;
third authorization indication information, wherein the third authorization indication information is used to authorize the second terminal to send a reference signal; or
fourth authorization indication information, wherein the fourth authorization indication information is used to authorize the second terminal to determine a reference signal result.

45. The terminal discovery method according to claim 44, wherein the second service information comprises at least one of the following: a service code corresponding to the second terminal, a service identifier corresponding to the second terminal, or a service type corresponding to the second terminal.

46. A terminal discovery apparatus, comprising:
a first obtaining unit, configured to obtain first configuration information related to a first service; and
a first sending unit, configured to send a first request message to a second terminal; wherein
the first request message is used to request discovery of the second terminal supporting the first service, and the first service comprises a ranging-based service and/or a sidelink positioning service.

47. A terminal discovery apparatus, comprising:
a second obtaining unit, configured to obtain second configuration information related to a first service; and
a second receiving unit, configured to receive a first request message sent by a first terminal; wherein
the first request message is used for discovering a second terminal that supports the first service, and the first service is a terminal discovery related service.

48. A terminal discovery apparatus, comprising:
a fifth sending module, configured to send first configuration information to a first terminal, wherein the first configuration information is used for a first service, and the first service comprises a ranging-based service and/or a sidelink positioning service.

49. A terminal discovery apparatus, comprising:
a sixth sending module, configured to send second configuration information to a second terminal; wherein the second configuration information is used for a first service, and the first service comprises a ranging-based service and/or a sidelink positioning service.

50. A first terminal, comprising a processor and a memory, wherein a program or instruction capable of running on the processor is stored in the memory, and when the program or instruction is executed by the processor, the steps of the terminal discovery method according to any one of claims 1 to 18 are implemented.

51. A second terminal, comprising a processor and a memory, wherein a program or instruction capable of running on the processor is stored in the memory, and when the program or instruction is executed by the processor, the steps of the terminal discovery method according to any one of claims 19 to 39 are implemented.

52. A first network-side device, comprising a processor, a memory, and a program or instruction stored in the memory and capable of running on the processor, wherein when the program or instruction is executed by the processor, the steps of the terminal discovery method according to any one of claims 40 to 42 are implemented.

53. A second network-side device, comprising a processor, a memory, and a program or instruction stored in the memory and capable of running on the processor, wherein when the program or instruction is executed by the processor, the steps of the terminal discovery method according to any one of claims 43 to 45 are implemented.

54. A readable storage medium, wherein the readable storage medium stores a program or instruction, and when the program or instruction is executed by a processor, the steps of the terminal discovery method according to any one of claims 1 to 18 are implemented, or the steps of the terminal discovery method according to any one of claims 19 to 39 are implemented, or the steps of the terminal discovery method according to any one of claims 40 to 42 are implemented, or the steps of the terminal discovery method according to any one of claims 43 to 45 are implemented.
